# EUROPEAN PATENT APPLICATION

(11) **EP 4 429 302 A1**
(43) Date of publication of application: **11.09.2024**
(21) Application number: 22889189.1
(22) Date of filing: 28.10.2022
(51) Int. Cl.: H04W 16/14

(54) **ELECTRONIC DEVICE, SPECTRUM MANAGEMENT DEVICE, SYSTEM AND METHOD, AND STORAGE MEDIUM**

(30) Priority: 05.11.2021 CN 202111305789
(71) Applicant: Sony Group Corporation, Tokyo 108-0075 (JP)
(72) Inventor: SUN, Chen, Beijing 100027 (CN); WANG, Shuo, Beijing 100027 (CN)
(74) Representative: D Young & Co LLP
(86) International application number: PCT/CN2022/128098
(87) International publication number: WO 2023/078164

(57) **Abstract**

The present disclosure relates to an electronic device, a spectrum management device, system and method, and a storage medium. The electronic device in a wireless communication sub-system according to the present disclosure comprises a processing circuit, which is configured to: determine to allow the electronic device or other electronic devices in the wireless communication sub-system to use a spectrum in the wireless communication sub-system; update a spectrum occupation state of the wireless communication sub-system; generate a spectrum usage record, which is used for indicating that the electronic device or the other electronic devices use the spectrum; and generate and send a block in an authorization blockchain, wherein the block comprises the spectrum occupation state and the spectrum usage record, and all the electronic devices in the wireless communication sub-system maintain the authorization blockchain. By using the electronic device, the spectrum management device, system and method, and the storage medium according to the present disclosure, blockchain technology can be applied to a spectrum sharing scheme without the need for spectrum sensing, thereby reducing the resource overheads of spectrum sharing, and also improving the throughput and success rate of a spectrum transaction.

## Description

This application claims priority to Chinese Patent Application No. 202111305789.8 titled "Electronic device, spectrum management device, system and method, and storage medium", filed on November 5, 2021 with the China National Intellectual Property Administration, which is incorporated herein by reference in its entirety.

### FIELD

Embodiments of the present disclosure generally relate to the field of wireless communication, and in particular to an electronic device, a spectrum management device, a wireless communication system, a wireless communication method and a computer-readable storage medium.

### BACKGROUND

With the application of 5G technology, deployment of base stations becomes more intensive. In addition, the quantity of terminals in various forms such as mobile phone, IoT device, and wearable device increases rapidly. Therefore, there is an increasing demand for spectrum resources, especially for a frequency band below 6GHz that is suitable for mobile communications. Dynamic spectrum access technology is proposed. A secondary user discovers an idle spectrum of a primary user through spectrum sensing, and uses the idle spectrum for transmission, so that spectrum utilization is improved. However, this spectrum sharing scheme of obtaining idle spectrum through spectrum sensing has high resource overhead and limited accuracy. In addition, the centralized spectrum sharing scheme is prone to a single-point failure and lacks flexibility.

A blockchain is a chain data structure which combines data blocks in a chronological manner and is a distributed ledger that is cryptographically guaranteed to be tamper-resistant and unforgeable. The characteristics of the blockchain include time series data, decentralization (distributed), tamper resistance, collective maintenance, openness and transparency, security and trustworthiness.

Therefore, the present disclosure provides a technical solution which applies the blockchain technology to the spectrum sharing scheme without spectrum sensing, so that resource overhead of spectrum sharing is reduced and throughput and success rate of spectrum transactions are improved.

### SUMMARY

This section provides a general summary of the present disclosure, rather than a comprehensive disclosure of a full scope or all features of the present disclosure.

An object of the present disclosure is to provide an electronic device, a spectrum management device, a wireless communication system, a wireless communication method, and a computer-readable storage medium, in order to apply blockchain technology to a spectrum sharing scheme without spectrum sensing, so that a resource cost for spectrum sharing is reduced and throughput and success rate of spectrum transaction are improved.

According to an aspect of the present disclosure, an electronic device in a wireless communication subsystem is provided. The electronic device includes processing circuitry configured to: determining to allow the electronic device or another electronic device in the wireless communication subsystem to use a spectrum in the wireless communication subsystem; update a spectrum occupancy state of the wireless communication subsystem, the spectrum occupancy state including an occupancy state of each spectrum in the wireless communication subsystem; generate a spectrum usage record indicating that the electronic device or the other electronic device uses the spectrum; and generate and transmit a block in an authorized blockchain, the block including the spectrum occupancy state and the spectrum usage record, wherein all electronic devices in the wireless communication subsystem maintain the authorized blockchain.

According to another aspect of the present disclosure, an electronic device in a wireless communication subsystem is provided. The electronic device includes processing circuitry configured to: receive a block from a verification electronic device in the wireless communication subsystem, the block including an updated spectrum occupancy state of the wireless communication subsystem and a spectrum usage record indicating that a verification electronic device or a non-verification electronic device in the wireless communication subsystem uses a spectrum in the wireless communication subsystem, the spectrum occupancy state including an occupancy state of each spectrum in the wireless communication subsystem; and add the block to an authorized blockchain, wherein the verification electronic device updates the spectrum occupancy state, generates the spectrum usage record, and generates the block, wherein the electronic device serves as a non-verification electronic device, and wherein all electronic devices in the wireless communication subsystem maintain the authorized blockchain.

According to another aspect of the present disclosure, a spectrum management device is provided. The spectrum management device includes processing circuitry configured to: determine to allow a spectrum transaction between two spectrum management devices; update available spectrum information of a wireless communication system, the available spectrum information including information on available spectrums in the wireless communication system; generate a spectrum transaction record indicating the spectrum transaction; and generate and transmit a block in a public blockchain, the block including the available spectrum information and the spectrum transaction record, wherein the wireless communication system includes multiple wireless communication subsystems, and the two spectrum management devices are located in different wireless communication subsystems, and wherein all spectrum management devices in the wireless communication system maintain the public blockchain.

According to another aspect of the present disclosure, a spectrum management device is provided. The spectrum management device includes processing circuitry configured to: receive a block from a leader spectrum management device, the block including updated available spectrum information of a wireless communication system and a spectrum transaction record indicating a spectrum transaction between two spectrum management devices, the available spectrum information including information on available spectrums in the wireless communication system; and add the block to a public blockchain, wherein the wireless communication system includes multiple wireless communication subsystems, and the two spectrum management devices are located in different wireless communication subsystems, wherein all spectrum management devices in the wireless communication system maintain the public blockchain, and wherein the leader spectrum management device is used for updating the available spectrum information, generating the spectrum transaction record, and generating the block.

According to an aspect of the present disclosure, a wireless communication system is provided. The wireless communication system includes a first wireless communication subsystem and a second wireless communication subsystem. The first wireless communication subsystem includes: first spectrum management device configured to update available spectrum information including information on available spectrums in the wireless communication system, generate a spectrum transaction record in the wireless communication system, and generate and transmit a block in a public blockchain including the available spectrum information and the spectrum transaction record; first verification electronic device configured to update a spectrum occupancy state including an occupancy state of each spectrum in the first wireless communication subsystem, generate a spectrum usage record in the first wireless communication subsystem, and generate and transmit a block in a first authorized blockchain including the spectrum occupancy state and the spectrum usage record; and first another electronic device configured to receive a block including the spectrum occupancy state and the spectrum usage record from the first verification electronic device, and add the block to the first authorized blockchain, wherein the first spectrum management device, the first verification electronic device and the first another electronic device maintain the first authorized blockchain. The second wireless communication subsystem includes: second spectrum management device configured to receive a block including the available spectrum information and the spectrum transaction record from the first spectrum management device, and add the block to the public blockchain; second verification electronic device configured to update a spectrum occupancy state including an occupancy state of each spectrum in the second wireless communication subsystem, generate a spectrum usage record in the second wireless communication subsystem, and generate and transmit a block in a second authorized blockchain including the spectrum occupancy state and the spectrum usage record; and second another electronic device configured to receive a block including the spectrum occupancy state and the spectrum usage record from the second verification electronic device, and add the block to the second authorized blockchain, wherein the second spectrum management device, the second verification electronic device and the second another electronic device maintain the second authorized blockchain, and wherein the first spectrum management device and the second spectrum management device maintain the public blockchain.

According to another aspect of the present disclosure, a wireless communication method performed by an electronic device in a wireless communication subsystem is provided. The wireless communication method includes: determining to allow the electronic device or another electronic device in the wireless communication subsystem to use a spectrum in the wireless communication subsystem; updating a spectrum occupancy state of the wireless communication subsystem, the spectrum occupancy state including an occupancy state of each spectrum in the wireless communication subsystem; generating a spectrum usage record indicating that the electronic device or the other electronic device uses the spectrum; and generating and transmitting a block in an authorized blockchain, the block including the spectrum occupancy state and the spectrum usage record, wherein all electronic devices in the wireless communication subsystem maintain the authorized blockchain.

According to another aspect of the present disclosure, a wireless communication method performed by an electronic device in a wireless communication subsystem is provided. The wireless communication method includes: receiving a block from a verification electronic device in the wireless communication subsystem, the block including an updated spectrum occupancy state of the wireless communication subsystem and a spectrum usage record indicating that a verification electronic device or a non-verification electronic device in the wireless communication subsystem uses a spectrum in the wireless communication subsystem, the spectrum occupancy state including an occupancy state of each spectrum in the wireless communication subsystem; and adding the block to an authorized blockchain, wherein the verification electronic device updates the spectrum occupancy state, generates the spectrum usage record, and generates the block, and wherein the electronic device serves as a non-verification electronic device, and all electronic devices in the wireless communication subsystem maintain the authorized blockchain.

According to another aspect of the present disclosure, a wireless communication method performed by a spectrum management device is provided. The wireless communication method includes: determining to allow a spectrum transaction between two spectrum management devices; updating available spectrum information of a wireless communication system, the available spectrum information including information on available spectrums in the wireless communication system; generating a spectrum transaction record indicating the spectrum transaction; generating and transmitting a block in a public blockchain, the block including the available spectrum information and the spectrum transaction record, wherein the wireless communication system includes multiple wireless communication subsystems, and the two spectrum management devices are located in different wireless communication subsystems, and wherein all spectrum management devices in the wireless communication system maintain the public blockchain.

According to another aspect of the present disclosure, a wireless communication method performed by a spectrum management device is provided. The wireless communication method includes: receiving a block from a leader spectrum management device, the block including updated available spectrum information of a wireless communication system and a spectrum transaction record indicating a spectrum transaction between two spectrum management devices, the available spectrum information including information on available spectrums in the wireless communication system; and adding the block to a public blockchain, wherein the wireless communication system includes multiple wireless communication subsystems, and the two spectrum management devices are located in different wireless communication subsystems, wherein all spectrum management devices in the wireless communication system maintain the public blockchain, and wherein the leader spectrum management device is used for updating the available spectrum information, generating the spectrum transaction record, and generating the block.

According to another aspect of the present disclosure, a computer-readable storage medium including executable computer instructions is provided. The executable computer instructions, when executed by a computer, cause the computer to perform the wireless communication method according to the present disclosure.

According to another aspect of the present disclosure, a computer program is provided. The computer program, when executed by a computer, causes the computer to perform the wireless communication method according to the present disclosure.

With the electronic device, the spectrum management device, the wireless communication system, the wireless communication method, and the computer-readable storage medium according to the present disclosure, within the wireless communication subsystem, all nodes maintain the authorized blockchain, the verification node updates the spectrum occupancy state and generates the spectrum usage record. Thereby, the blockchain is utilized to record the spectrum occupancy state and the spectrum usage record. In this way, the node within the wireless communication subsystem can use the spectrum without spectrum sensing, so that flexibility of the spectrum sharing is improved. Further, the spectrum management device of each wireless communication subsystem maintains a public blockchain. The leader spectrum management device updates the available spectrum information and generates the spectrum transaction record. Thereby, the available spectrum information and the spectrum transaction record are recorded by using the blockchain. In this way, spectrum transaction may be performed between wireless communication subsystems without spectrum sensing.

Further areas of applicability will become apparent from the description provided herein. The description and specific examples in this summary are for purposes of illustration only and are not intended to limit the scope of the present disclosure.

### BRIEF DESCRIPTION OF THE DRAWINGS

The accompanying drawings described herein are only for illustrative purposes of selected embodiments, rather than all possible embodiments, and are not intended to limit the scope of the present disclosure. In the accompanying drawings:
Figure 1 is a schematic diagram illustrating a scenario of a wireless communication system according to an embodiment of the present disclosure;
Figure 2 is a block diagram illustrating an exemplary configuration of electronic device serving as a verification node according to an embodiment of the present disclosure;
Figure 3 is a schematic diagram illustrating content of a spectrum occupancy state according to an embodiment of the present disclosure;
Figure 4 is a schematic diagram illustrating content of a block in an authorized blockchain according to an embodiment of the present disclosure;
Figure 5 is a block diagram illustrating an exemplary configuration of electronic device serving as a non-verification node according to an embodiment of the present disclosure;
Figure 6 is a block diagram illustrating an exemplary configuration of spectrum management device serving as a leader spectrum management node according to an embodiment of the present disclosure;
Figure 7 is a schematic diagram illustrating content of available spectrum information according to an embodiment of the present disclosure;
Figure 8 is a schematic diagram illustrating content of a block in a public blockchain according to an embodiment of the present disclosure;
Figure 9 is a block diagram illustrating an exemplary configuration of spectrum management device serving as a non-leader spectrum management node according to an embodiment of the present disclosure;
Figure 10 is a diagram illustrating transition of a node state of spectrum management device according to an embodiment of the present disclosure;
Figure 11 is a schematic diagram illustrating a configuration of a wireless communication system according to an embodiment of the present disclosure.
Figure 12 is a schematic diagram illustrating blockchains according to an embodiment of the present disclosure;
Figure 13 is a signaling flow diagram illustrating a process of spectrum sharing within a wireless communication subsystem according to an embodiment of the present disclosure;
Figure 14 is a signaling flow diagram illustrating a process of spectrum transaction between wireless communication subsystems according to an embodiment of the present disclosure;
Figure 15 is a signaling flow diagram illustrating a process of updating available spectrum information of a wireless communication system according to an embodiment of the present disclosure;
Figure 16 is a schematic diagram illustrating a process of updating a spectrum occupancy state by wireless communication subsystems as a buyer and a seller in a spectrum transaction after the spectrum transaction is made between the wireless communication subsystems according to an embodiment of the present disclosure;
Figure 17 is a flowchart illustrating a wireless communication method performed by electronic device serving as a verification node according to an embodiment of the present disclosure;
Figure 18 is a flowchart illustrating a wireless communication method performed by electronic device serving as a non-verification node according to an embodiment of the present disclosure;
Figure 19 is a flowchart illustrating a wireless communication method performed by spectrum management device serving as a leader spectrum management node according to an embodiment of the present disclosure;
Figure 20 is a flowchart illustrating a wireless communication method performed by spectrum management device serving as a non-leader spectrum management node according to an embodiment of the present disclosure;
Figure 21 is a schematic diagram illustrating an application scenario of the present disclosure;
Figure 22 is a block diagram illustrating an example of a server that can implement spectrum management device according to the present disclosure;
Figure 23 is a block diagram illustrating a first example of a schematic configuration of an eNB (evolved Node B); and
Figure 24 is a block diagram illustrating a second example of a schematic configuration of an eNB.

Although the present disclosure is easily subjected to various modifications and replacements, specific embodiments thereof, as examples, are shown in the drawings and described in detail here. However, it should be understood that the description of specific embodiments herein is not intended to limit the present disclosure to specific forms that are disclosed. On the contrary, the present disclosure is intended to cover all modifications, equivalents and replacements that fall within the scope of the present disclosure. It should be noted that throughout the several drawings, corresponding components are indicated by corresponding reference signs.

### DETAILED DESCRIPTION

Examples of the present disclosure are now fully described with reference to the accompanying drawings. The following description is merely substantially exemplary and is not intended to limit the present disclosure, an application or use thereof.

Exemplary embodiments are provided so that the present disclosure is described in detail and fully conveys the scope thereof to those skilled in the art. Examples of specific components, apparatus, methods and other specific details are set forth to provide detailed understanding of embodiments of the present disclosure. It will be apparent to those skilled in the art that the exemplary embodiments may be implemented in many different forms without the use of specific details, and they should not be construed as limiting the scope of the present disclosure. In some exemplary embodiments, well-known processes, well-known structures, and well-known technologies are not described in detail.

The description is given in the following order.
1. Description of scenarios;
2. Exemplary configuration of electronic device serving as a verification node;
3. Exemplary configuration of electronic device serving as a non-verification node;
4. Exemplary configuration of spectrum management device serving as a leader spectrum management node;
5. Exemplary configuration of spectrum management device serving as a non-leader spectrum management node;
6. System embodiment; and
7. Method embodiment; and
8. Application example.

### < 1. Description of scenarios>

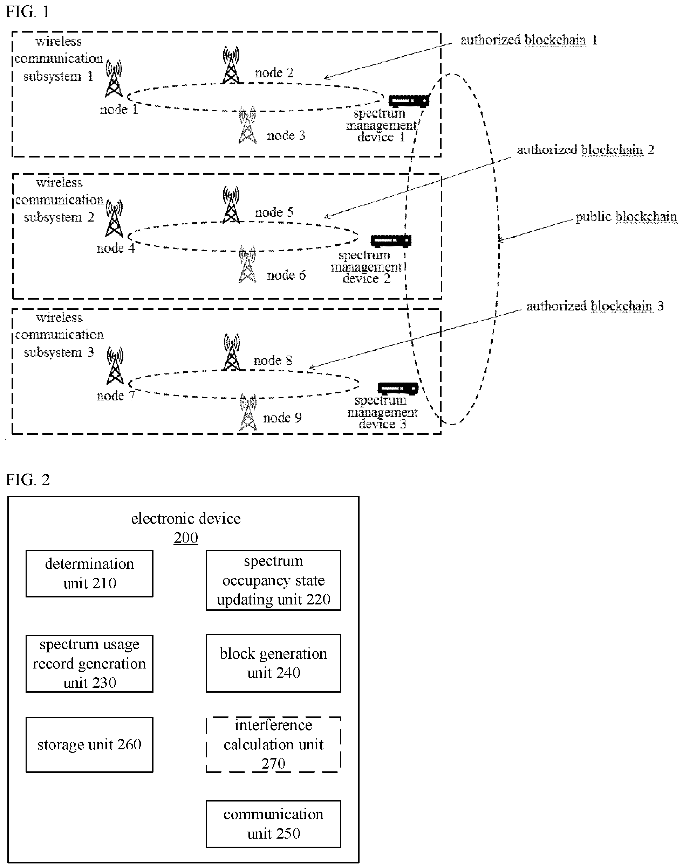

Figure 1 is a schematic diagram illustrating a scenario of a wireless communication system according to an embodiment of the present disclosure. As shown in Figure 1, the wireless communication system includes three wireless communication subsystems, i.e., wireless communication subsystem 1, wireless communication subsystem 2 and wireless communication subsystem 3. Each of the wireless communications subsystems includes spectrum management device. For example, spectrum management device 1 is a node having a spectrum management function in the wireless communication subsystem 1, spectrum management device 2 is a node having a spectrum management function in the wireless communication subsystem 2, and spectrum management device 3 is a node having a spectrum management function in the wireless communication subsystem 3. Further, each of the wireless communication subsystems may further include multiple other nodes. For example, the wireless communication subsystem 1 includes node 1, node 2, and node 3, the wireless communication subsystem 2 includes node 4, node 5, and node 6, and the wireless communication subsystem 3 includes node 7, node 8, and node 9. Although Figure 1 shows an example in which the wireless communication system includes three wireless communication subsystems, and each of the wireless communication subsystems includes three nodes and spectrum management device, the present disclosure is not limited thereto.

That is, the wireless communication system of the present disclosure may include one or more wireless communication subsystems. Different ones of the wireless communication subsystems may include different networks, including but not limited to different operator networks, local private networks, Internet of Vehicles, and other networks. In other words, if the wireless communication system includes one wireless communication subsystem, the wireless communication system is a homogeneous network, and if the wireless communication system includes multiple wireless communication subsystems, the wireless communication system is a heterogeneous network. Apparently, the above examples are not limiting. The wireless communication system may be divided into multiple wireless communication subsystems based on an actual need, so that the wireless communication subsystems share a spectrum by using an authorized blockchain, and different wireless communication subsystems perform a spectrum transaction by using a public blockchain.

According to an embodiment of the present disclosure, the authorized blockchain may be maintained by all nodes in a wireless communication subsystem. For example, authorization blockchain 1 is maintained by node 1, node 2, node 3 and spectrum management device 1. For example, authorized blockchain 2 is maintained by node 4, node 5, node 6 and spectrum management device 2. For example, authorized blockchain 3 is maintained by node 7, node 8. node 9 and spectrum management device 3. In each wireless communication subsystem, a block in the authorized blockchain is generated by a fixed node. The node that generates the block is referred to herein as a verification node (or verification electronic device). A node other than the spectrum management device and the verification node is referred to herein as a non-verification node (or non-verification electronic device, another electronic device).

According to an embodiment of the present disclosure, the public blockchain may be maintained by all spectrum management device in a wireless communication subsystem. For example, the public blockchain is maintained by spectrum management device 1, spectrum management device 2 and spectrum management device 3. A spectrum management device responsible for generating a block in the public blockchain is referred to herein as a leader spectrum management node (or leader spectrum management device), and other spectrum management device than the leader spectrum management node is referred to as a non-leader spectrum management node (or non-leader spectrum management device).

In the present disclosure, there is a trust relationship between nodes of the authorized blockchain, and only an authorized node can access the authorized blockchain. That is, for the authorized blockchain 1, node 1, node 2, node 3 and spectrum management device 1 are authorized nodes and can access the authorized blockchain 1. Nodes other than these nodes can access the authorized blockchain 1 only after joining the authorized blockchain 1 through an authentication mechanism. There is no trust relationship between nodes of the public blockchain, and any node can access the public blockchain. In addition, a smart contract is stored on all spectrum management device to constrain an operation of the spectrum management device on a blockchain. For example, the spectrum management device may be triggered through the smart contract to update a spectrum occupancy state in wireless communication subsystems, when a spectrum transaction is carried out between the wireless communication subsystems and the spectrum occupancy state in the wireless communication subsystems are changed.

For such scenario, the present disclosure provides electronic device, spectrum management device, a wireless communication system, a wireless communication method, and a computer-readable storage medium, in order to apply blockchain technology to a spectrum sharing scheme, without spectrum sensing, so that a resource cost of spectrum sharing is reduced and a throughput and success rate of a spectrum transaction are improved.

The wireless communication system according to the present disclosure may be a 5G NR communication system or a higher-level communication system, and may include a homogeneous network or a heterogeneous network.

The spectrum management device according to the present disclosure may be any type of server having a spectrum management function. For example, the spectrum management device may be implemented as an edge node, a control node, an SAS (Spectrum Access System), a CxM (Coexistence Manager) or a domain proxy.

The electronic device according to the present disclosure may be network side device, such as base station device, and may be an eNB or gNB (base station in the 5th generation communication system). In addition, the electronic device may be implemented as a CBSD (Citizens Broadband Radio Service Devices).

### <2. Exemplary configuration of electronic device serving as a verification node>

Figure 2 is a block diagram illustrating an exemplary configuration of electronic device 200 serving as a verification node according to an embodiment of the present disclosure. The electronic device 200 is in a wireless communication subsystem. The wireless communication subsystem further includes one or more non-verification nodes and spectrum management nodes. The electronic device 200, all the non-verification nodes and the spectrum management nodes in the wireless communication subsystem maintain an authorization blockchain.

As shown in Figure 2, the electronic device 200 may include a determination unit 210, a spectrum occupancy state updating unit 220, a spectrum usage record generation unit 230, a block generation unit 240, a communication unit 250 and a storage unit 260.

Here, units of the electronic device 200 may be included in processing circuitry. It should be noted that the electronic device 200 may include a single processing circuit or multiple processing circuits. Further, the processing circuitry may include various discrete functional units for performing various different functions and/or operations. It should be noted that these functional units may be physical entities or logical entities, and units with different names may be implemented by a same physical entity.

According to an embodiment of the present disclosure, the determination unit 210 is configured to determine to allow the electronic device 200 or another electronic device in the wireless communication subsystem to use a spectrum in the wireless communication subsystem. Here, the other electronic device refers to electronic device in the wireless communication subsystem other than the spectrum management device and the electronic device 200, that is, a non-verification node.

According to an embodiment of the present disclosure, the spectrum occupancy state updating unit 220 may update a spectrum occupancy state of the wireless communication subsystem, the spectrum occupancy state including an occupancy state of each spectrum in the wireless communication subsystem. In the present disclosure, the wireless communication subsystem may have spectrums (channels) allocated to the wireless communication subsystem. The spectrum occupancy state may include occupancy states of all spectrums for the wireless communication subsystem, that is, indicates whether a spectrum is occupied.

According to an embodiment of the present disclosure, the spectrum usage record generation unit 230 may generate a spectrum usage record indicating that the electronic device 200 or the other electronic device uses the spectrum.

According to an embodiment of the present disclosure, the block generation unit 240 may generate a block in an authorized blockchain, the block including the spectrum occupancy state and the spectrum usage record.

According to an embodiment of the present disclosure, the authorized blockchain may be stored in the storage unit 260. For example, after the block generation unit 240 generates a block, the authorized blockchain stored in the storage unit 260 may be updated, that is, a newly generated block is added to the authorized blockchain.

According to an embodiment of the present disclosure, the electronic device 200 may transmit the block generated by the block generation unit 240 through the communication unit 250. Here, the electronic device 200 may broadcast and transmit the block so that other nodes in the wireless communication subsystem can receive the block.

According to an embodiment of the present disclosure, the electronic device 200 may receive, through the communication unit 250, a spectrum usage request from the other electronic device, the spectrum usage request including a spectrum that the other electronic device expects to use and a time range in which the other electronic device expects to use the spectrum. For example, the time range for the spectrum expected to be used may include a start time and an end time, or may include a start time and a usage duration.

According to an embodiment of the present disclosure, in a case that the node which expects to use the spectrum is the electronic device 200, the electronic device 200 may know the spectrum that the electronic device 200 expects to use, a transmit power and the time range in which the spectrum is expected to be used; and in a case that the node which expects to use the spectrum is the non-verification node, the electronic device 200 may obtain, from the spectrum usage request, the spectrum that the non-verification node expects to use and the time range in which the spectrum is expected to be used. Further, the determination unit 210 may determine whether to allow the electronic device 200 or the non-verification node to use the spectrum based on the spectrum expected to be used and the time range in which the spectrum is expected to be used.

As shown in Figure 2, the electronic device 200 may further include an interference calculation unit 270. The interference calculation unit 270 is configured to determine an interference caused by the electronic device 200 or the other electronic device using the spectrum to each electronic device other than the electronic device 200 or the other electronic device in the wireless communication subsystem. For example, the electronic device 200 expects to use spectrum 1, then the interference calculation unit may determine an interference caused by the electronic device 200, after using spectrum 1, to all non-verification nodes in the wireless communication subsystem. For example, the other electronic device expects to use spectrum 2, then the interference calculation unit may determine an interference caused by the other electronic device, after using spectrum 2, to the electronic device 200 and other non-verification nodes. Here, the interference calculation unit 270 may calculate the interference by using an algorithm known in the art, for example, based on a distance between two device, a transmit power and other parameters, which is not limited in the present disclosure.

According to an embodiment of the present disclosure, the determination unit 210 may determine whether to allow the electronic device 200 or the other electronic device to use the spectrum based on the interference determined through the interference calculation unit 270. In an implementation, in a case that the interference caused by the electronic device 200 or the other electronic device to each electronic device is less than an interference threshold, it is determined to allow the electronic device 200 or the other electronic device to use the spectrum. Otherwise, the electronic device 200 or the other electronic device is not allowed to use the spectrum.

According to an embodiment of the present disclosure, the electronic device 200 may transmit a spectrum usage response to another electronic device through the communication unit 250 to notify the other electronic device whether the other electronic device is allowed to use the requested spectrum.

According to an embodiment of the present disclosure, in a case where the determination unit 210 determines that a node in the wireless communication subsystem is allowed to use the spectrum, the spectrum occupancy state updating unit 220 may update the spectrum occupancy state of the wireless communication subsystem. The spectrum occupancy state may include occupancy state information on whether each spectrum is occupied. In addition, the spectrum occupancy state may further include a node where a spectrum is occupied and/or a time range in which a spectrum is occupied. For example, the spectrum occupancy state updating unit 220 may add spectrum occupancy information to indicate that a certain spectrum is occupied by a certain node during a certain period of time.

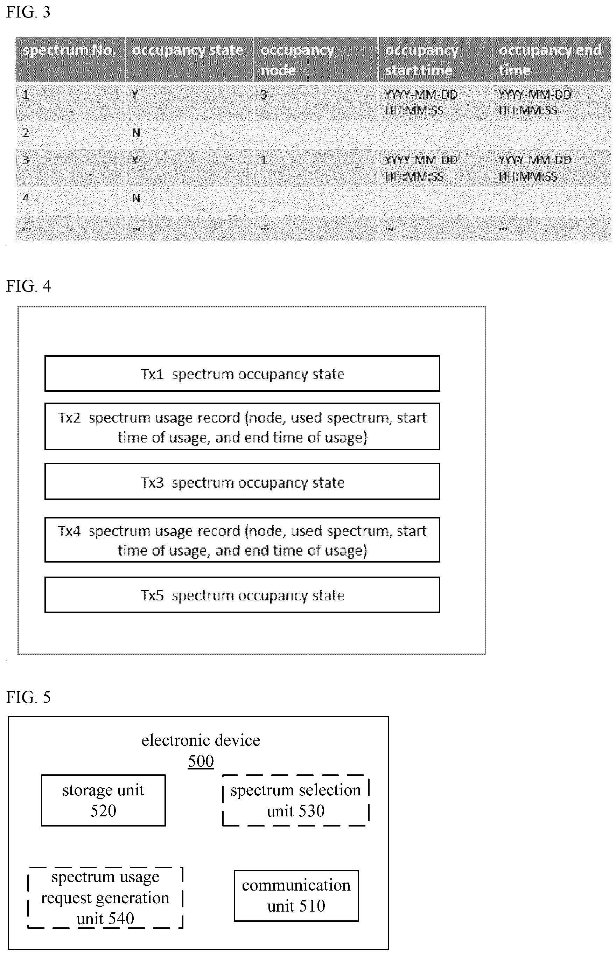

Figure 3 is a schematic diagram illustrating content of a spectrum occupancy state according to an embodiment of the present disclosure. As shown in Figure 3, spectrums in a wireless communication subsystem are numbered 1, 2, 3, 4, and so on. Y indicates that the spectrum is occupied, and N indicates that the spectrum is not occupied. If a spectrum is occupied, a node ID may be used to indicate a node that occupies the spectrum. In addition, an occupancy start time and an occupancy end time may be further used to represent a time range in which the spectrum is occupied, wherein YYYY represents a year, MM represents a month, DD represents a day, HH represents an hour, MM represents a minute, and SS represents a second.

According to an embodiment of the present disclosure, in a case where the determination unit 210 determines that a node in the wireless communication subsystem is allowed to use the spectrum, the spectrum usage record generation unit 230 may generate a spectrum usage record. The spectrum usage record may include a node used, a spectrum used, a start time of spectrum usage, and an end time of spectrum usage.

According to an embodiment of the present disclosure, in a case that a spectrum transaction is carried out between the wireless communication subsystem where the electronic device 200 is located and another wireless communication subsystem, the spectrum management device in the wireless communication subsystem may update the spectrum occupancy state of the wireless communication subsystem. In this case, the electronic device 200 may receive, through the communication unit 250, an updated spectrum occupancy state of the wireless communication subsystem from the spectrum management device in the wireless communication subsystem. Further, the block generation unit 240 may generate a block including the updated spectrum occupancy state, and transmit the block through the communication unit 250. For example, in a case that the wireless communication subsystem where the electronic device 200 is located serves as a seller, a record of the traded spectrum in the spectrum occupancy state may be deleted. In a case that the wireless communication subsystem where the electronic device 200 is located serves as a buyer, a record of the traded spectrum may be added.

That is, when a spectrum is used by a node within the wireless communication subsystem, the spectrum occupancy state updating unit 220 updates the spectrum occupancy state of the wireless communication subsystem, and the spectrum usage record generation unit 230 generates the spectrum usage record. When the wireless communication subsystem carries out the spectrum transaction with another wireless communication subsystem, the spectrum occupancy state of the wireless communication subsystem is updated, without generating a spectrum usage record.

Figure 4 is a schematic diagram illustrating content of a block in an authorized blockchain according to an embodiment of the present disclosure. As shown in Figure 4, in a block, record Tx1 is an updated spectrum occupancy state, and record Tx2 is a spectrum usage record. The record Tx1 and record Tx2 indicate occurrence of a spectrum usage process within the wireless communication subsystem. In the block, record Tx3 is an updated spectrum occupancy state, and record Tx4 is a spectrum usage record. The record Tx3 and record Tx4 indicate occurrence of another spectrum usage process within the wireless communication subsystem. Record Tx5 is an updated spectrum occupancy state, indicating that the wireless communication subsystem has a spectrum transaction with another wireless communication subsystem.

Figure 4 shows only content of a block body. A block header may include a hash value of the block, a hash value of a previous block, and a Merkle tree root hash.

According to an embodiment of the present disclosure, the block generation unit 240 may determine a time to generate a block based on a size of the block. For example, the block generation unit 240 may place the records Tx1 to Tx5 as in Figure 4 into a block, and transmit the block when the size of the block meets a predetermined threshold. In an example, the block generation unit 240 may determine the time to generate a block based on time. For example, the block generation unit 240 may periodically generate blocks with a predetermined period, regardless of the size of each block. In addition, the block generation unit 240 may generate a block based on urgency recorded in the block. If the record in the block includes information that a spectrum usage time is about to expire, the time to generate the block may be reduced. That is, the block generation unit 240 may determine a size and generation time of a block through any method, which is not limited in the present disclosure.

As can be seen, with the electronic device 200 according to the embodiment of the present disclosure, it can be determined whether to allow a node in the wireless communication subsystem to use a spectrum of the wireless communication subsystem. Further, when a node is allowed to use a spectrum in the wireless communication subsystem, the electronic device 200 can update the spectrum occupancy state and generate the spectrum usage record, and can transmit the spectrum occupancy state and the spectrum usage record to another node through the block. In this way, nodes in the wireless communication subsystem can realize spectrum sharing within the wireless communication subsystem without a spectrum sensing process. Furthermore, when a spectrum transaction is carried out in the wireless communication subsystem, the electronic device 200 may write the updated spectrum occupancy state into the block. Due to the use of the authorized blockchain in spectrum sharing of the wireless communication subsystem, advantages of low latency and high throughput is realized, and an overhead caused by a consensus process is saved.

### <3. Exemplary configuration of electronic device serving as a non-verification node>

Figure 5 is a block diagram illustrating a structure of electronic device 500 serving as a non-verification node according to an embodiment of the present disclosure. The electronic device 500 is in a wireless communication subsystem. The wireless communication subsystem further includes a verification node and a spectrum management node, and optionally one or more non-verification nodes. The electronic device 500, the verification node, the non-verification nodes and the spectrum management node in the wireless communication subsystem maintain an authorization blockchain. The verification node may be implemented by the electronic device 200, for example, which is responsible for updating a spectrum occupancy state, generating a spectrum usage record, and generating a block.

As shown in Figure 5, the electronic device 500 may include a communication unit 510 and a storage unit 520.

Here, units of the electronic device 500 may be included in processing circuitry. It should be noted that the electronic device 500 may include a single processing circuit or multiple processing circuits. Further, the processing circuitry may include various discrete functional units for performing various different functions and/or operations. It should be noted that these functional units may be physical entities or logical entities, and units with different names may be implemented by a same physical entity.

According to an embodiment of the present disclosure, the electronic device 500 may receive, through the communication unit 510, a block from verification electronic device in the wireless communication subsystem, the block including an updated spectrum occupancy state of the wireless communication subsystem, and a spectrum usage record indicating that verification electronic device or non-verification electronic device in the wireless communication subsystem uses a spectrum in the wireless communication subsystem, the spectrum occupancy state including an occupancy state of each spectrum in the wireless communication subsystem.

According to an embodiment of the present disclosure, the authorized blockchain may be stored in the storage unit 520. After receiving the block, the electronic device 500 may add the new block to the authorized blockchain to update the authorized blockchain stored in the storage unit 520.

According to an embodiment of the present disclosure, as shown in Figure 5, the electronic device 500 may further include a spectrum selection unit 530. The spectrum selection unit 530 is configured to: determine an idle spectrum based on the spectrum occupancy state of the wireless communication subsystem when the electronic device 500 needs to use a spectrum resource; and select, from the idle spectrum, the spectrum that the electronic device 500 expects to use.

According to an embodiment of the present disclosure, as shown in Figure 5, the electronic device 500 may further include a spectrum usage request generation unit 540 for generating a spectrum usage request. The spectrum usage request includes the spectrum that the electronic device 500 expects to use. Further, the electronic device 500 may transmit the spectrum usage request to the verification electronic device through the communication unit 510.

According to an embodiment of the present disclosure, the spectrum use request generated by the spectrum use request generation unit 540 may further include a time range in which the electronic device 500 expects to use the spectrum, which for example, includes a start time and end time of the expected spectrum usage, or the start time of the expected spectrum usage and a usage duration.

According to an embodiment of the present disclosure, the spectrum occupancy state received by the electronic device 500 may further include an occupancy node and an occupancy time range for each spectrum in the wireless communication subsystem.

According to an embodiment of the present disclosure, the electronic device 500 may further receive a spectrum usage response from the verification electronic device through the communication unit 510 to determine whether the electronic device allows the electronic device 500 to use the requested spectrum.

As can be seen, the electronic device 500 according to the embodiment of the present disclosure can transmit the spectrum usage request to the verification node when needing to use the spectrum. Further, the electronic device 500 may receive a block from the verification node, the block including the spectrum occupancy state and the spectrum usage record. In this way, nodes in the wireless communication subsystem can realize spectrum sharing within the wireless communication subsystem without a spectrum sensing process. Furthermore, when a spectrum transaction is carried out in the wireless communication subsystem, the electronic device 500 may receive the block, including the spectrum occupancy state. Due to the use of the authorized blockchain in spectrum sharing of the wireless communication subsystem, advantages of low latency and high throughput is realized, and an overhead caused by a consensus process is saved.

Although the electronic device 200 as a verification node and the electronic device 500 as a non-verification node are described independently above, both the electronic device 200 and the electronic device 500 may be base stations or CBSDs, and both may be determined as verification nodes or non-verification nodes. In other words, a verification node may become a non-verification node under a certain circumstance, and a non-verification node may become a verification node. Therefore, the electronic device 200 and the electronic device 500 may have a same structure, and may include, for example, the determination unit 210, the spectrum occupancy state updating unit 220, the spectrum usage record generation unit 230, the block generation unit 240, the communication unit 250 and the storage unit 260. The communication unit 250 may perform the function of the communication unit 510, and the storage unit 260 may perform the function of the storage unit 520. In an example, the electronic device 200 and the electronic device 500 may further include one or more of the following: the interference calculation unit 270, the spectrum selection unit 530, and the spectrum usage request generation unit 540.

### <4. Exemplary configuration of spectrum management device serving as a leader spectrum management node>

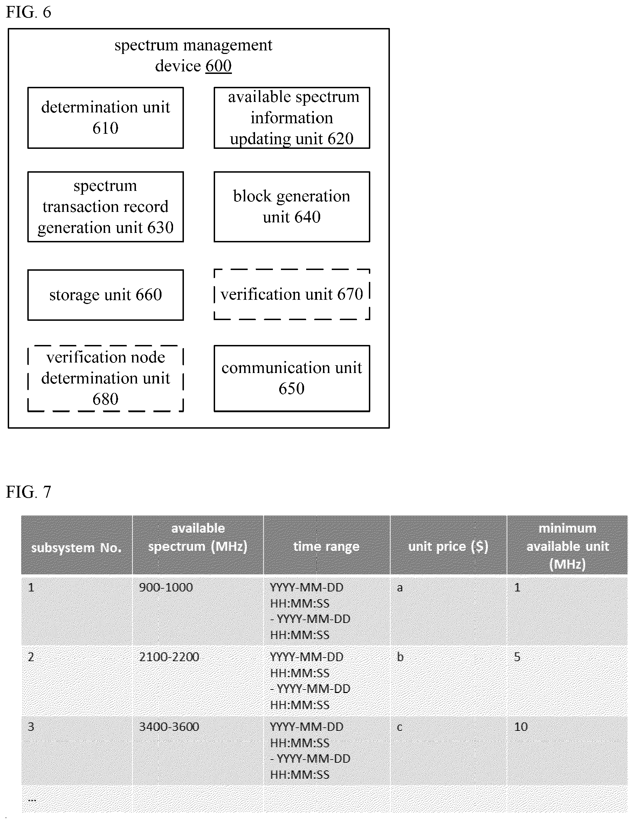

Figure 6 is a block diagram illustrating a structure of spectrum management device 600 serving as a leader spectrum management node according to an embodiment of the present disclosure. The spectrum management device 600 is in a wireless communication system. The wireless communication system further includes one or more non-leader spectrum management device. Different spectrum management device are responsible for spectrum management in different wireless communication subsystems. All spectrum management device in the wireless communication system maintain a public blockchain.

As shown in Figure 6, the spectrum management device 600 may include a determination unit 610, an available spectrum information updating unit 620, a spectrum transaction record generation unit 630, a block generation unit 640, a communication unit 650 and a storage unit 660.

Here, units of the spectrum management device 600 may be included in processing circuitry. It should be noted that the spectrum management device 600 may include a single processing circuit or multiple processing circuits. Further, the processing circuitry may include various discrete functional units for performing various different functions and/or operations. It should be noted that these functional units may be physical entities or logical entities, and units with different names may be implemented by a same physical entity.

According to an embodiment of the present disclosure, the determination unit 610 may determine whether to allow a spectrum transaction between wireless communication subsystems where two spectrum management devices are located.

According to an embodiment of the present disclosure, when the spectrum transaction is carried out, the available spectrum information updating unit 620 may update available spectrum information of the wireless communication system, the available spectrum information including information on available spectrums in the wireless communication system. For example, the available spectrum information updating unit 620 may change a time range for a sold spectrum or delete information on a sold spectrum.

According to an embodiment of the present disclosure, the spectrum transaction record generation unit 630 may generate a spectrum usage record indicating the spectrum transaction. The spectrum transaction record may include information such as an identity of a buyer node, an identity of a seller node, an identity of a traded spectrum, and a time range for the transaction.

According to an embodiment of the present disclosure, the block generation unit 640 may generate a block in a public blockchain, the block including the available spectrum information and the spectrum transaction record.

According to an embodiment of the present disclosure, the public blockchain may be stored in the storage unit 660. After the block generation unit 640 generates a new block, the spectrum management device 600 may add the new block to the public blockchain, and update the public blockchain stored in the storage unit 660.

According to an embodiment of the present disclosure, the spectrum management device 600 may transmit the block generated by the block generation unit 640 through the communication unit 650. For example, the spectrum management device 600 may broadcast the block so that non-verified spectrum management device can receive the block.

According to an embodiment of the present disclosure, the spectrum management device 600 may receive, through the communication unit 650, information on available spectrums from another spectrum management device, the information on available spectrums including an available spectrum, a time range for an available spectrum, a wireless communication subsystem where an available spectrum is present, and a price of an available spectrum.

According to an embodiment of the present disclosure, the available spectrum information updating unit 620 may update available spectrum information of the wireless communication system. In addition, the block generation unit 640 may generate a block including the available spectrum information, and the spectrum management device 600 may transmit the block through the communication unit 650.

That is, when a spectrum transaction is carried out between wireless communication subsystems, the available spectrum information updating unit 620 updates the available spectrum information of the overall wireless communication system, and the spectrum transaction record generation unit 630 generates the spectrum transaction record. In the case that the wireless communication subsystem has a new available spectrum, the available spectrum information updating unit 620 may receive the information on available spectrums from the wireless communication subsystem and update the available spectrum information of the overall wireless communication system without generating the spectrum transaction record.

Figure 7 is a schematic diagram illustrating content of available spectrum information according to an embodiment of the present disclosure. As shown in Figure 7, a number of a subsystem represents an identification of a wireless communication subsystem. A time range for an available spectrum may be represented by a start time and end time, where YYYY represents a year, MM represents a month, DD represents a day, HH represents an hour, MM represents a minute, and SS represents a second. A unit price indicates a price per unit of spectrum, and a minimum available unit indicates a minimum unit for selling a spectrum. For example, spectrums of 900MHz to 1000MHz of wireless communication subsystem 1 is available, the minimum available unit is 1MHz, and the price per unit of spectrum is a.

According to an embodiment of the present disclosure, when a buyer of the spectrum transaction is not the spectrum management device 600, the spectrum management device 600 may receive a spectrum transaction request from the buyer of the spectrum transaction, the spectrum transaction request including a spectrum that the buyer of the spectrum transaction expects to trade. Further, the spectrum management device 600 may broadcast the spectrum transaction request through the communication unit 650.

According to an embodiment of the present disclosure, each spectrum management device other than the one as the buyer of the spectrum transaction may verify whether the spectrum transaction is allowed. The spectrum management device 600 may receive, through the communication unit 650, a verification result from each spectrum management device other than the buyer of the spectrum transaction in the wireless communication system.

According to an embodiment of the present disclosure, as shown in Figure 6, the spectrum management device 600 may further include a verification unit 670 for verifying whether the spectrum transaction is allowed and thereby generating a verification result. Further, the determination unit 610 may finally determine whether to allow the spectrum transaction based on the verification result of each spectrum management device other than the buyer of the spectrum transaction in the wireless communication system (including the verification result received through the communication unit 650 and the verification result generated by the verification unit 670).

According to an embodiment of the present disclosure, when a buyer of the spectrum transaction is the spectrum management device 600, the spectrum management device 600 may generate a spectrum transaction request, the spectrum transaction request including a spectrum that the spectrum management device expects to trade. Further, the spectrum management device 600 may broadcast the spectrum transaction request through the communication unit 650.

Further, the spectrum management device 600 may receive, through the communication unit 650, a verification result from each spectrum management device in the wireless communication system. Then, the determination unit 610 may finally determine whether to allow the spectrum transaction based on the verification result of each spectrum management device in the wireless communication system.

According to an embodiment of the present disclosure, the spectrum transaction request may further include a time range for the spectrum expected to be traded, which for example, includes a start time and end time, or the start time and a transaction duration.

The following description is made by taking an operation of the verification unit 670 as an example to illustrate an embodiment in which each spectrum management device other than the buyer of the spectrum transaction in the wireless communication system determines whether to allow the spectrum transaction.

According to an embodiment of the present disclosure, the verification unit 670 may determine whether the spectrum expected to be traded is included in the available spectrum information, including whether the spectrum expected to be traded is within the range of the available spectrum, whether the time range for the spectrum expected to be traded is within the time range for the available spectrums, and the like.

According to an embodiment of the present disclosure, the verification unit 670 may further determine the verification result of the spectrum management device based on the interference caused to the wireless communication subsystem where the spectrum management device 600 is located after the buyer of the spectrum transaction uses the spectrum. For example, when it is determined that the interference caused to the wireless communication subsystem where the spectrum management device 600 is located after the buyer of the spectrum transaction uses the spectrum is less than an interference threshold, the verification unit 670 may determine to allow the spectrum transaction. When it is determined that the interference caused to the wireless communication subsystem where the spectrum management device 600 is located after the buyer of the spectrum transaction uses the spectrum is greater than or equal to the interference threshold, the verification unit 670 may determine not to allow the spectrum transaction. Here, the verification unit 670 may calculate the interference caused to the wireless communication subsystem where the spectrum management device 600 is located after the buyer of the spectrum transaction uses the spectrum based on a method known in the art, which is not limited in the present disclosure.

According to an embodiment of the present disclosure, after verification results of all spectrum management devices other than the buyer of the spectrum transaction are obtained, the determination unit 610 may determine whether to allow the spectrum transaction based on the verification results. For example, in a case that verification results of more than a certain number of the spectrum management devices (including but not limited to half of the number of all spectrum management devices) indicate that the spectrum transaction is allowed, the determination unit 610 may determine to allow the spectrum transaction, or otherwise determine not to allow the spectrum transaction.

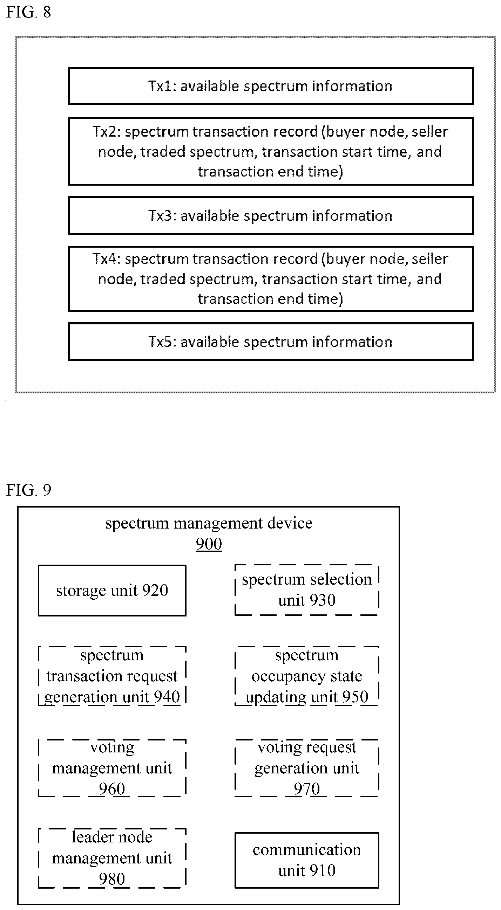

Figure 8 is a schematic diagram illustrating content of a block in a public blockchain according to an embodiment of the present disclosure. As shown in Figure 8, in a block, record Tx1 is updated available spectrum information, and record Tx2 is a spectrum transaction record. The record Tx1 and record Tx2 indicate occurrence of a spectrum transaction process within the wireless communication subsystem. In the block, record Tx3 is updated available spectrum information, and record Tx4 is a spectrum transaction record. The record Tx3 and record Tx4 indicate occurrence of another spectrum transaction process within the wireless communication subsystem. Record Tx5 is updated available spectrum information, indicating that the wireless communication subsystem has a new available spectrum.

Figure 8 shows only content of a block body. A block header may include a hash value of the block, a hash value of a previous block, a Merkle tree root hash and a tenure of the spectrum management device 600.

According to an embodiment of the present disclosure, the block generation unit 640 may determine a time to generate a block based on a size of the block. For example, the block generation unit 640 may place the records Tx1 to Tx5 as in Figure 8 into a block, and transmit the block when the size of the block meets a predetermined threshold. In an example, the block generation unit 640 may determine the time to generate a block based on time. For example, the block generation unit 640 may periodically generate blocks with a predetermined period, regardless of the size of each block. In addition, the block generation unit 640 may generate a block based on urgency recorded in the block. If the record in the block includes a spectrum transaction for which a spectrum usage time is about to expire, the time to generate the block may be reduced. That is, the block generation unit 640 may determine a size and generation time of a block through any method, which is not limited in the present disclosure.

As can be seen, with the spectrum management device 600 according to the embodiment of the present disclosure, the spectrum management device of each wireless communication subsystem maintains a public blockchain. The spectrum management device 600 updates the available spectrum information and generates the spectrum transaction record. Thereby, the available spectrum information and the spectrum transaction record are recorded using the blockchain. In heterogeneous networks, there is no trust between different networks, and therefore the public blockchain may be utilized for recording a spectrum transaction process. In this way, spectrum transaction may be performed between wireless communication subsystems without spectrum sensing.

According to an embodiment of the present disclosure, as shown in Figure 6, the spectrum management device 600 may further include a verification node determination unit 680, which is configured to determine a verification node for the wireless communication subsystem where the spectrum management device 600 is located. That is, the spectrum management device in the wireless communication subsystem determines the verification node for the wireless communication subsystem. In the scenario as shown in Figure 1, the spectrum management device 1 determines a verification node of the wireless communication subsystem 1, the spectrum management device 2 determines a verification node of the wireless communication subsystem 2, and the spectrum management device 3 determines a verification node of the wireless communication subsystem 3.

According to an embodiment of the present disclosure, the verification node determination unit 680 may determine centrality of each node based on social relationship of respective nodes in the wireless communication subsystem, and determine a node having the largest centrality as the verification node. The centrality includes but is not limited to degree centrality, closeness centrality and eigenvalue centrality.

According to an embodiment of the present disclosure, the verification node determination unit 680 may determine a social relationship between two nodes and thereby determine a social relationship graph, based on change of traffic in transmit service and receive service of a node, change in spectrum resources of a node, a distance between nodes, and a computing capability of node (including but not limited to a CPU spectrum, floating point operations per second and other parameters). For example, it is determined that there is a social relationship between two nodes when the social relationship between the two nodes is greater than a threshold. In the social relationship graph, the social relationship is expressed as an edge between the two nodes. Otherwise, there is no social relationship between two nodes, which is represented as no edge between two nodes in the social relationship graph.

For example, the degree centrality represents the number of nodes having a social relationship with a certain node, which is expressed in the social relationship graph as the number of edges connected to the node. The verification node determination unit 680 may determine a node having the largest degree centrality as the verification node, so that the node having the largest number of direct connections to nodes can be selected.

For another example, the closeness centrality describes a propagation speed from a certain node to other nodes. The verification node determination unit 680 may determine a node having the largest closeness centrality as the verification node, so that the node having the largest propagation speed can be selected.

For another example, the eigenvalue centrality of a node is proportional to a sum of centrality scores of neighboring nodes, that is, the eigenvalue centrality describes a connection relationship between a node and other nodes. The verification node determination unit 680 may determine a node having the largest eigenvalue centrality as the verification node, so that the node having the largest effect on all nodes can be selected.

According to an embodiment of the present disclosure, the verification node determination unit 680 may further determine the node having the largest resource among all nodes in the wireless communication subsystem as the verification node. The resource includes one or more of throughput of a node, computing resource (including but not limited to CPU spectrum, floating point operations per second and other parameters) and storage resource (size of a storage space). Therefore, the verification node determination unit 680 may determine a node that has a large throughput, a strong computing power and/or a large storage space as the verification node.

The verification node is required to perform a function of verifying the spectrum usage request and generating the block in the authorized blockchain, and therefore needs to be a node which is more important in the social relationship and having more resources. According to an embodiment of the present disclosure, the verification node determination unit 680 may determine the verification node based on the centrality and/or resources of the node. Thereby, the verification node can be determined more reasonably.

According to an embodiment of the present disclosure, after the verification node is determined by the verification node determination unit 680, the spectrum management device 600 may transmit, through the communication unit 650, information of the verification node to all nodes in the wireless communication subsystem. For example, the spectrum management device 600 may broadcast the information of the verification node.

As mentioned above, according to the embodiment of the present disclosure, the spectrum management device 600 can determine the verification node in the wireless communication subsystem, and the verification node can permanently generate the block. Thereby, management of the blockchain is simplified and a signaling overhead is saved.

### <5. Exemplary configuration of spectrum management device serving as a non-leader spectrum management node>

Figure 9 is a block diagram illustrating a structure of spectrum management device 900 serving as a non-leader spectrum management node according to an embodiment of the present disclosure. The spectrum management device 900 is in a wireless communication system. The wireless communication system further includes leader spectrum management device, and optionally may include one or more other non-leader spectrum management device. Different spectrum management device are responsible for spectrum management in different wireless communication subsystems. All spectrum management device in the wireless communication system maintain a public blockchain. The leader spectrum management device is configured to update available spectrum information, generate a spectrum transaction record, and generate a block.

As shown in Figure 9, the spectrum management device 900 may include a communication unit 910 and a storage unit 920.

Here, units of the spectrum management device 900 may be included in processing circuitry. It should be noted that the spectrum management device 900 may include a single processing circuit or multiple processing circuits. Further, the processing circuitry may include various discrete functional units for performing various different functions and/or operations. It should be noted that these functional units may be physical entities or logical entities, and units with different names may be implemented by a same physical entity.

According to an embodiment of the present disclosure, the spectrum management device 900 may receive, through the communication unit 910, a block from leader spectrum management device, the block including updated available spectrum information of the wireless communication system, and the spectrum transaction record indicating a spectrum transaction between two spectrum management device, the available spectrum information including information on available spectrums in the wireless communication system.

According to an embodiment of the present disclosure, the public blockchain may be stored in the storage unit 920. When a new block is received by the spectrum management device 900, the spectrum management device 900 may add the new block to a public blockchain, so as to update the public blockchain stored in the storage unit 920.

According to an embodiment of the present disclosure, as shown in Figure 9, the spectrum management device 900 may further include a spectrum selection unit 930. The spectrum selection unit 930 is configured to: determine, when it is necessary to purchase a spectrum, an available spectrum of another wireless communication subsystem based on the available spectrum information of the wireless communication system; and select, from the available spectrum, a spectrum that the spectrum management device expects to trade.

According to an embodiment of the present disclosure, as shown in Figure 9, the spectrum management device 900 may further include a spectrum transaction request generation unit 940 for generating a spectrum transaction request. The spectrum transaction request includes the spectrum that the spectrum management device 900 expects to trade. In an embodiment, the spectrum transaction request may further include a time range for a transaction. Further, the spectrum management device 900 may transmit the spectrum transaction request to the leader spectrum management device through the communication unit 910.

According to an embodiment of the present disclosure, in a case that the spectrum management device 900 has a new available spectrum, the spectrum management device 900 may transmit information on the new available spectrum to the leader spectrum management device. The information may include, for example, the available spectrum, a time range for the available spectrum, a wireless communication subsystem where the available spectrum is present, a price of the available spectrum, and a minimum unit of the available spectrum.

According to an embodiment of the present disclosure, the spectrum management device 900 may further receive a spectrum transaction response from the leader spectrum management device, so as to determine whether the leader spectrum management device allows the spectrum transaction. Further, if the spectrum transaction is allowed, the spectrum management device 900 may initiate a payment process.

According to an embodiment of the present disclosure, as shown in Figure 9, the spectrum management device 900 may further include a spectrum occupancy state updating unit 950, which is configured to update, based on the traded spectrum, the spectrum occupancy state of the wireless communication subsystem where the spectrum management device 900 is located, in a case that the spectrum transaction of the spectrum management device 900 is allowed. For example, the spectrum occupancy state updating unit 950 may add information on the newly purchased spectrum in the spectrum occupancy state.

Further, the spectrum management device 900 may transmit, through the communication unit 910, the updated spectrum occupancy state to verification electronic device in the wireless communication subsystem, so that the verification electronic device generates and transmits a block in an authorized blockchain that includes the updated spectrum occupancy state.

According to an embodiment of the present disclosure, the spectrum management device as a seller of the spectrum transaction needs to update the spectrum occupancy state of the wireless communication subsystem where the spectrum management device is located, for example, to delete information on a newly sold spectrum.

The following describes how to determine the leader spectrum management device.

According to an embodiment of the present disclosure, the spectrum management device 900 may periodically receive information from the leader spectrum management device. In this case, the spectrum management device 900 is in a state of "follower node".

According to an embodiment of the present disclosure, as shown in Figure 9, the spectrum management device 900 may further include a voting request generation unit 970. The voting request generation unit 970 is configured to generate a voting request indicating that the spectrum management device 900 expects to be a leader spectrum management device, in a case that no information is received from the leader management device within a predetermined time period. Here, the spectrum management device 900 may set a timer. The timer is reset when information from the leader spectrum management device is received. The voting request may be generated if no information from the leader spectrum management device has been received when the timer expires. Further, the spectrum management device 900 may transmit the voting request to another spectrum management device in the wireless communication system through the communication unit 910, for example, in a broadcasting manner. In this case, the spectrum management device 900 is in a state of "candidate node".

According to an embodiment of the present disclosure, the spectrum management device 900 may receive a voting response from the other spectrum management device.

According to an embodiment of the present disclosure, as shown in Figure 9, the spectrum management device 900 may further include a leader node management unit 980. The leader node management unit 980 is configured to determine the spectrum management device 900 to be leader spectrum management device when the number of received voting responses is greater than a predetermined threshold. In this case, the spectrum management device 900 is in a state of "leader node". The predetermined threshold here is preferably half of the total number of spectrum management device.

According to an embodiment of the present disclosure, the leader node management unit 980 may further determine a tenure of the spectrum management device 900 as the leader spectrum management device. For example, the leader node management unit 980 may randomly generate a value as the tenure.

According to an embodiment of the present disclosure, the leader node management unit 980 may determine that the spectrum management device 900 no longer serves as the leader spectrum management device, in a case that the tenure expires or in a case that the spectrum management device 900 discovers another leader spectrum management device. In this case, the spectrum management device 900 is in a state of "follower node".

According to an embodiment of the present disclosure, as shown in Figure 9, the spectrum management device 900 may further include a voting management unit 960. The voting management unit 960 is configured to determine whether to vote for another spectrum management device in the wireless communication system when a voting request indicating that the other spectrum management device expects to be a leader spectrum management device is received from the other spectrum management device.

According to an embodiment of the present disclosure, the voting management unit 960 may determine whether to vote for the other spectrum management device based on a historical transaction record between the spectrum management device 900 and the other spectrum management device, computing resource of the other spectrum management device, and/or time of the voting request.

For example, the voting management unit 960 may determine to vote for the other spectrum management device when there is a spectrum transaction between the other spectrum management device and the spectrum management device 900. If there are multiple spectrum management devices that have carried out spectrum transactions with the spectrum management device 900, the voting management unit 960 may determine to vote for the spectrum management device that has carried out a greater number of transactions.

For another example, the voting management unit 960 may determine to vote for the other spectrum management device when the computing resource (including but not limited to CPU spectrum, floating point operations per second and other parameters) of the other spectrum management device is large.

As another example, the voting management unit 960 may vote for the spectrum management device whose voting request is received earlier.

According to an embodiment of the present disclosure, when the voting management unit 960 determines to vote for the other spectrum management device, the spectrum management device 900 may transmit a voting response to the other spectrum management device.

In the conventional blockchain technology, only transmission time of the voting request is considered in election of a leader. That is, a node whose voting request is received earlier will be voted for. According to the embodiments of the present disclosure, during the election of a leader spectrum management node, historical transactions and computing resources are considered. Therefore, the leader spectrum management node can be elected more rationally and a success rate of the spectrum transaction can be improved. In addition, as the tenure is generated randomly, fairness can be ensured and collisions can be prevented during the election of a leader spectrum management node.

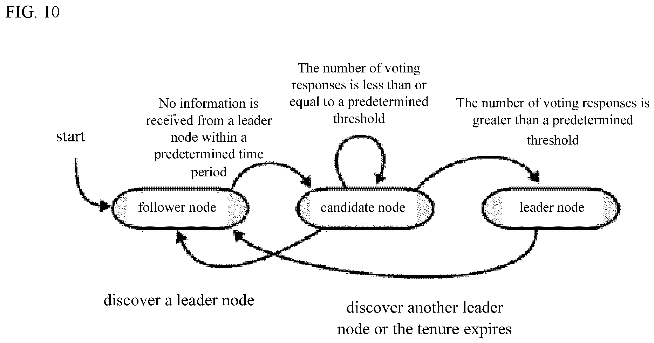

Figure 10 is a diagram illustrating transition of a node state of spectrum management device according to an embodiment of the present disclosure. As shown in Figure 10, the spectrum management device is in the state of "follower node" by default. The spectrum management device transits to the state of "candidate node" and initiates a voting request in a case that no leader spectrum management node is discovered within a predetermined time. The state of "candidate node" returns to the state of "follower node" once a leader node is discovered. When the number of votes is less than or equal to a predetermined threshold, the state of "candidate node" is maintained, waiting to initiate the next round of voting. When the number of votes is greater than the predetermined threshold, the spectrum management device transits to the state of "leader node". The spectrum management device transits to the state of "follower node" in a case that the tenure expires or another leader spectrum management node is discovered.

As can be seen, with the spectrum management device 900 according to the embodiments of the present disclosure, the public blockchain is maintained by spectrum management device in each wireless communication subsystem. When the spectrum management device 900 needs to purchase a spectrum, the spectrum management device 900 may transmit a spectrum transaction request to the leader spectrum management device. Therefore, the available spectrum information and the spectrum transaction record are recorded by using the public blockchain. In heterogeneous networks, there is no trust between different networks, and therefore the public blockchain may be utilized for recording a spectrum transaction process. In this way, spectrum transaction may be performed between wireless communication subsystems without spectrum sensing. In addition, the leader spectrum management device may be determined through election. During the election of the leader spectrum management device, historical transactions and computing resources are considered. Therefore, the leader spectrum management device can be elected more rationally and a success rate of the spectrum transaction can be improved.

Although the spectrum management device 600 as the leader spectrum management node and the spectrum management device 900 as the non-leader spectrum management node are described independently above, the spectrum management device 600 may serve as a non-leader spectrum management node at another time instant, and the spectrum management device 900 may serve as a leader spectrum management node at another time instant. Therefore, the spectrum management device 600 and the spectrum management device 900 may have a same structure, and may include, for example, the determination unit 610, the available spectrum information updating unit 620, the spectrum transaction record generation unit 630, the block generation unit 640, the communication unit 650 and the storage unit 660. The communication unit 650 may perform the function of the communication unit 910, and the storage unit 660 may perform the function of the storage unit 920. Alternatively, the spectrum management device 600 and the spectrum management device 900 may further include one or more of the following: the verification unit 670, the verification node determination unit 680, the spectrum selection unit 930, the spectrum transaction request generation unit 940, the spectrum occupancy state updating unit 950, the voting management unit 960, the voting request generation unit 970 and the leader node management unit 980.

### <6. System embodiment>

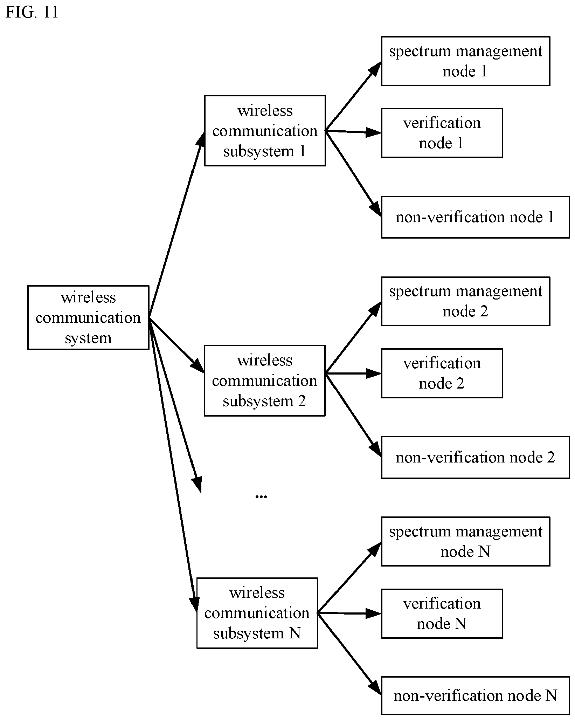

Hereinafter described is a wireless communication system according to an embodiment of the present disclosure. Figure 11 is a schematic diagram illustrating a configuration of a wireless communication system according to an embodiment of the present disclosure.

As shown in Figure 11, the wireless communication system according to an embodiment of the present disclosure includes N wireless communication subsystems (where N is a positive integer). Each wireless communication subsystem includes a spectrum management node, a verification node, and one or more non-verification nodes. All nodes in each wireless communication subsystem maintain an authorized blockchain. All spectrum management nodes in the wireless communication system maintain a public blockchain.

According to an embodiment of the present disclosure, N is equal to 1, and the wireless communication system includes only one wireless communication subsystem, that is, the wireless communication system is a homogeneous network. In this case, the wireless communication subsystem includes: spectrum management device configured to determine a verification node; verification electronic device configured to update a spectrum occupancy state including an occupancy state of each spectrum in the wireless communication subsystem, generate a spectrum usage record in the wireless communication subsystem, generate and transmit a block including the spectrum occupancy state and the spectrum usage record in an authorized blockchain; and at least one another electronic device configured to receive the block including the spectrum occupancy state and the spectrum usage record from the verification electronic device and add the block into the authorized blockchain. The authorized blockchain is maintained by the spectrum management device, the verification electronic device and the other electronic device.

According to an embodiment of the present disclosure, N is greater than 1, and the wireless communication system includes multiple wireless communication subsystems. A spectrum management node of one of the wireless communication subsystems serves as a leader spectrum management node, and spectrum management nodes of the other wireless communication subsystems serve as non-leader spectrum management nodes. That is, the wireless communication system includes: a first wireless communication subsystem and a second wireless communication subsystem. The first wireless communication subsystem includes: first spectrum management device configured to update available spectrum information including information on available spectrums in the wireless communication system, generate a spectrum transaction record in the wireless communication system, and generate and transmit a block including the available spectrum information and the spectrum transaction record in a public blockchain; first verification electronic device configured to update a spectrum occupancy state including an occupancy state of each spectrum in the first wireless communication subsystem, generate a spectrum usage record in the first wireless communication subsystem, generate and transmit a block including the spectrum occupancy state and the spectrum usage record in a first authorized blockchain; and first another electronic device configured to receive the block including the spectrum occupancy state and the spectrum usage record from the first verification electronic device and add the block into the first authorized blockchain. The first authorized blockchain is maintained by the first spectrum management device, the first verification electronic device and the first another electronic device. In this case, the wireless communication subsystem includes: second spectrum management device configured to receive a block including the available spectrum information and the spectrum transaction record from the first spectrum management device, and add the block to the public blockchain; second verification electronic device configured to update a spectrum occupancy state including an occupancy state of each spectrum in the second wireless communication subsystem, generate a spectrum usage record in the second wireless communication subsystem, generate and transmit a block including the spectrum occupancy state and the spectrum usage record in a second authorized blockchain; and second another electronic device configured to receive the block including the spectrum occupancy state and the spectrum usage record from the second verification electronic device and add the block into the second authorized blockchain. The second authorized blockchain is maintained by the second spectrum management device, the second verification electronic device and the second another electronic device. Here, the public blockchain is maintained by the first spectrum management device and the second spectrum management device.

As mentioned above, according to an embodiment of the present disclosure, all nodes in each wireless communication subsystem maintain an authorized blockchain, and spectrum management nodes in all the wireless communication subsystems maintain a public blockchain. Furthermore, each of the spectrum management nodes stores a smart contract. Various embodiments of the present disclosure are implemented through constraints of the smart contract.

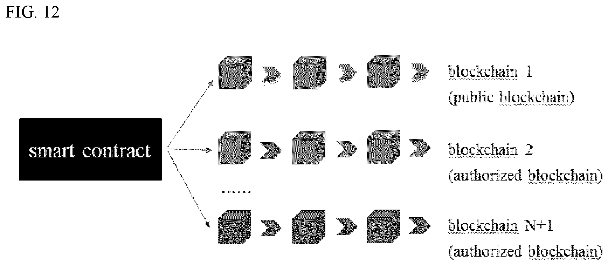

Figure 12 is a schematic diagram illustrating blockchains according to an embodiment of the present disclosure. As shown in Figure 12, assuming that the wireless communication system includes N wireless communication subsystems, under the control of the smart contract, the spectrum sharing scheme according to embodiments of the present disclosure can be achieved through a public blockchain (Blockchain 1) and N authorized blockchains (Blockchain 2 to Blockchain N+1).

### <7. Method embodiment>

Next, signaling flowcharts of processes according to embodiments of the present disclosure are described.

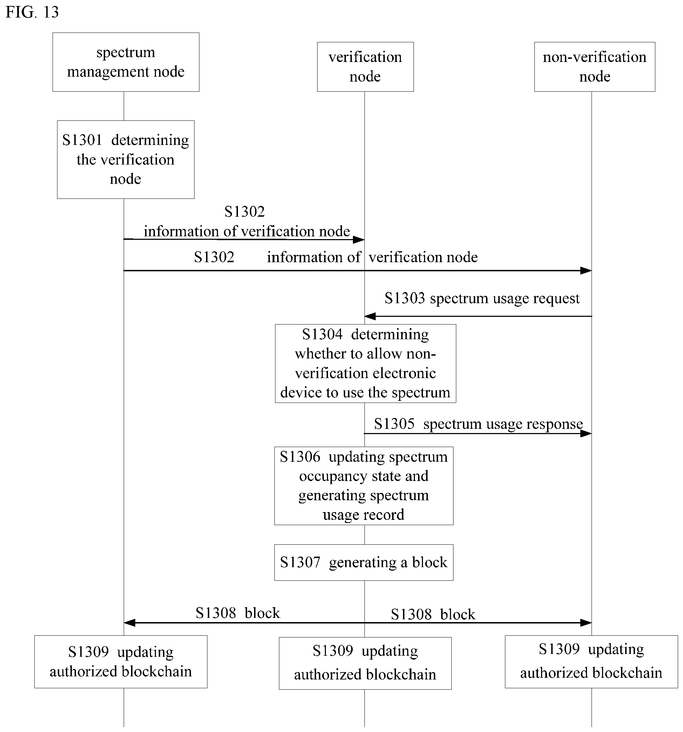

Figure 13 is a signaling flow diagram illustrating a process of spectrum sharing within a wireless communication subsystem according to an embodiment of the present disclosure. In Figure 13, a wireless communication subsystem includes a spectrum management node, a verification node, and a non-verification node. Here, a single non-verification node is taken as an example for describing functions of all non-verification nodes. The spectrum management node may be implemented by the spectrum management device 600 and the spectrum management device 900 as described above. The verification node may be implemented by the electronic device 200 as described above. The non-verification node may be implemented by the electronic device 500 as described above.

Reference is made to Figure 13. In step S1301, the spectrum management node determines the verification node in the wireless communication subsystem. In step S1302, the spectrum management node transmits information of the verification node to the verification node and the non-verification node in the wireless communication subsystem. In step S1303, the non-verification node needs to use a spectrum and therefore transmits a spectrum usage request to the verification node. In step S1304, the verification node determines whether to allow the non-verification node to use the spectrum requested in the spectrum usage request. It is assumed here that the verification node allows the non-verification node to use the spectrum. In step S1305, the verification node transmits a spectrum usage response to the non-verification node. In step S1306, the verification node updates a spectrum occupancy state in the wireless communication subsystem and generates a spectrum usage record. In step S1307, the verification node generates a block. In step S1308, the verification node transmits the generated block to all other nodes in the wireless communication subsystem. In step S1309, all nodes in the wireless communication subsystem add the new block to an authorized blockchain to update the authorized blockchain. As a result, spectrum sharing within the wireless communication subsystem is achieved through the authorized blockchain.

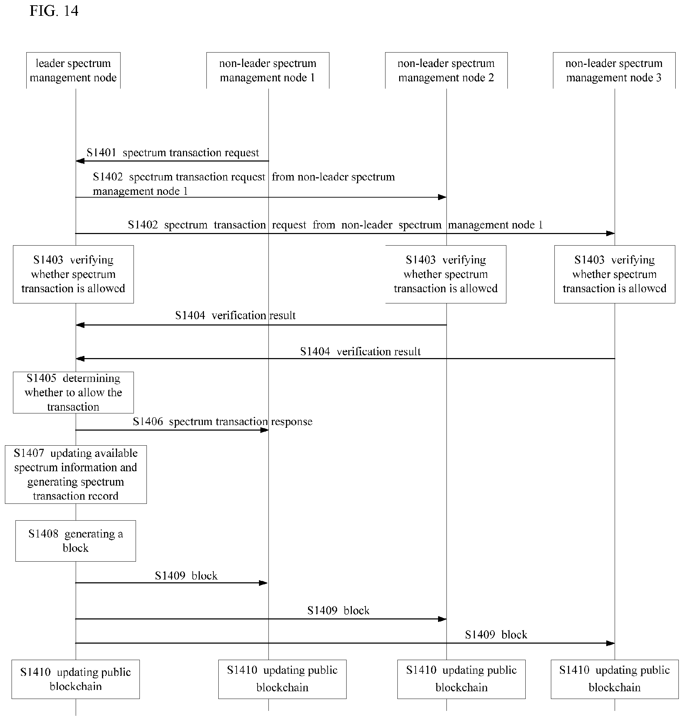

Figure 14 is a signaling flow diagram illustrating a process of spectrum transaction between wireless communication subsystems according to an embodiment of the present disclosure. In Figure 14, the wireless communication system includes four wireless communication subsystems, and each wireless communication subsystem includes a spectrum management node. A leader spectrum management node may be implemented by the spectrum management device 600 as described above, and a non-leader spectrum management node 1, a non-leader spectrum management node 2 and a non-leader spectrum management node 3 may be implemented by the spectrum management device 900 as described above.

As shown in Figure 14, in step S1401, the non-leader spectrum management node 1 expects to purchase an available spectrum in the wireless communication system, and therefore transmits a spectrum transaction request to the leader spectrum management node. In step S1402, the leader spectrum management node forwards the spectrum transaction request to the non-leader spectrum management node 2 and the non-leader spectrum management node 3. In step S1403, the leader spectrum management node, the non-leader spectrum management node 2 and the non-leader spectrum management node 3 respectively verify whether to agree to the spectrum transaction. In step S1404, the non-leader spectrum management node 2 and the non-leader spectrum management node 3 each transmit a verification result to the leader spectrum management node. In step S1405, the leader spectrum management node determines whether to allow the spectrum transaction based on a verification result from the leader spectrum management node, the verification result from the non-leader spectrum management node 2, and a verification result from the non-leader spectrum management node 3. It is assumed here that the leader spectrum management node allows the spectrum transaction. In step S1406, the leader spectrum management node transmits a spectrum transaction response to the non-leader spectrum management node 1, thereby triggering a payment process of the non-leader spectrum management node 1. In step S1407, the leader spectrum management node updates the available spectrum information in the wireless communication system and generates a spectrum transaction record. In step S1408, the leader spectrum management node generates a block. In step S1409, the leader spectrum management node transmits the generated block to all other spectrum management nodes in the wireless communication system. In step S1410, all spectrum management nodes in the wireless communication system add the new block to a public blockchain to update the public blockchain. As a result, spectrum transaction between wireless communication subsystems can be achieved through the public blockchain.

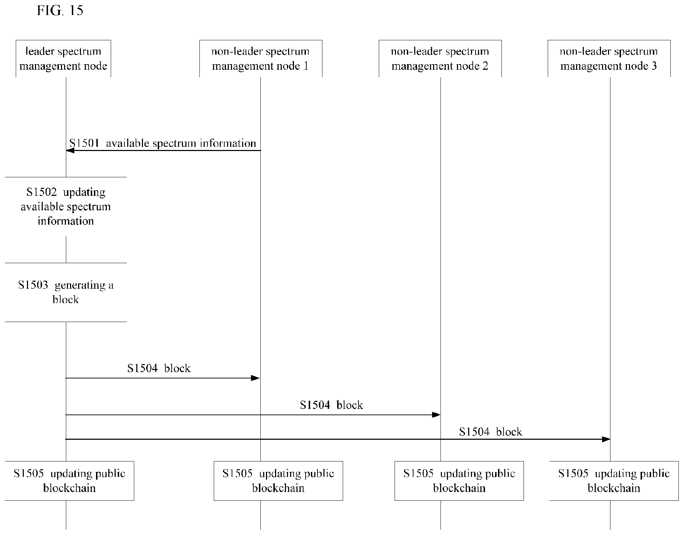

Figure 15 is a signaling flow diagram illustrating a process of updating available spectrum information of a wireless communication system according to an embodiment of the present disclosure. In Figure 15, the wireless communication system includes four wireless communication subsystems, and each wireless communication subsystem includes a spectrum management node. A leader spectrum management node may be implemented by the spectrum management device 600 as described above, and a non-leader spectrum management node 1, a non-leader spectrum management node 2 and a non-leader spectrum management node 3 may be implemented by the spectrum management device 900 as described above.

As shown in Figure 15, it is assumed that the wireless communication subsystem where the non-leader spectrum management node 1 is located has a new available spectrum. In step S1501, the non-leader spectrum management node 1 transmits available spectrum information to the leader spectrum management node. In step S 1502, the leader spectrum management node updates the available spectrum information in the wireless communication system. In step S1503, the leader spectrum management node generates a block. In step S1504, the leader spectrum management node transmits the generated block to all other spectrum management nodes in the wireless communication system. In step S1505, all spectrum management nodes in the wireless communication system add the new block to a public blockchain to update the public blockchain. As a result, the available spectrum in the wireless communication system can be recorded through the public blockchain.

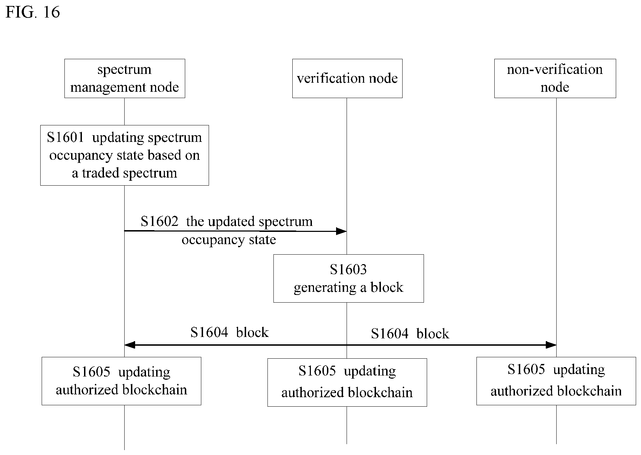

Figure 16 is a schematic diagram illustrating a process of wireless communication subsystems as a buyer or a seller in a spectrum transaction updating a spectrum occupancy state after a spectrum transaction between the wireless communication subsystems according to an embodiment of the present disclosure. In Figure 16, a wireless communication subsystem includes a spectrum management node, a verification node, and a non-verification node. Here, a single non-verification node is taken as an example for describing functions of all non-verification nodes. The spectrum management node may be implemented by the spectrum management device 600 and the spectrum management device 900 as described above. The verification node may be implemented by the electronic device 200 as described above. The non-verification node may be implemented by the electronic device 500 as described above. The spectrum management node here is in a wireless communication subsystem where the spectrum transaction is carried out, including a spectrum management node of the buyer of the spectrum transaction and a spectrum management node of the seller of the spectrum transaction.

As shown in Figure 16, in step S1601, the spectrum management node updates a spectrum occupancy state of the wireless communication subsystem based on a spectrum related to a spectrum transaction. For example, a spectrum management node as the buyer may add new spectrum information into the spectrum occupancy state, and a spectrum management node as the seller may delete or modify spectrum information in the spectrum occupancy state. In step S 1602, the spectrum management node transmits the updated spectrum occupancy state to the verification node. In step S1603, the verification node generates a block including the updated spectrum occupancy state. In step S1604, the verification node transmits the generated block to all other nodes in the wireless communication subsystem. In step S1605, all nodes in the wireless communication subsystem add the new block to an authorized blockchain to update the authorized blockchain. As a result, after the spectrum transaction, the wireless communication subsystems as the buyer or the seller of the spectrum transaction can update spectrum occupancy state, respectively, through the authorized blockchain.

Next, a wireless communication method performed by the electronic device 200 in a wireless communication subsystem according to an embodiment of the present disclosure is described in detail.

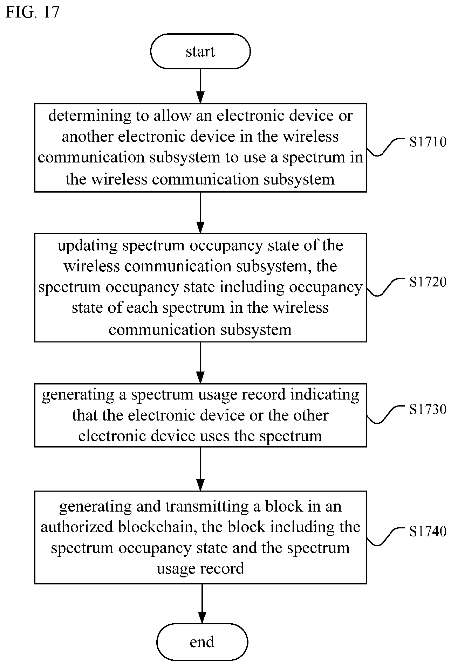

Figure 17 is a flowchart illustrating a wireless communication method performed by the electronic device 200 in a wireless communication subsystem according to an embodiment of the present disclosure.

Reference is made to Figure 17. In step S1710, it is determined to allow the electronic device 200 or another electronic device in the wireless communication subsystem to use a spectrum in the wireless communication subsystem.

In S1720, a spectrum occupancy state of the wireless communication subsystem is updated, the spectrum occupancy state including an occupancy state of each spectrum in the wireless communication subsystem.

In S1730, a spectrum usage record indicating that the electronic device 200 or the other electronic device uses the spectrum is generated.

In S1740, a block in an authorized blockchain is generated and transmitted, the block including the spectrum occupancy state and the spectrum usage record.

Here, the authorized blockchain is maintained by all electronic devices in the wireless communication subsystem.

Preferably, the wireless communication method further includes: determining an interference caused by the electronic device 200 or the other electronic device using the spectrum to each electronic device other than the electronic device 200 or the other electronic device in the wireless communication subsystem; and determining, based on the interference, whether to allow the electronic device 200 or the other electronic device to use the spectrum.

Preferably, determining whether to allow the electronic device 200 or the other electronic device to use the spectrum includes: determining to allow the electronic device 200 or the other electronic device to use the spectrum, in a case that the interference caused by the electronic device or the other electronic device to each electronic device is less than an interference threshold.

Preferably, the spectrum occupancy state further includes an occupancy node and occupancy time range for each spectrum in the wireless communication subsystem.

Preferably, the wireless communication method further includes: receiving a spectrum usage request from the other electronic device, the spectrum usage request including a spectrum that the other electronic device expects to use and a time range in which the other electronic device expects to use the spectrum.

Preferably, the wireless communication method further includes: receiving an updated spectrum occupancy state of the wireless communication subsystem from spectrum management device in the wireless communication subsystem; and generating and transmitting a block in an authorized blockchain, the block including the updated spectrum occupancy state.

According to an embodiment of the present disclosure, a subject that performs the method may be the electronic device 200 according to the embodiment of the present disclosure. Therefore, the previous embodiments of the electronic device 200 are applicable here.

Next, a wireless communication method performed by the electronic device 500 in a wireless communication subsystem according to an embodiment of the present disclosure is described in detail.

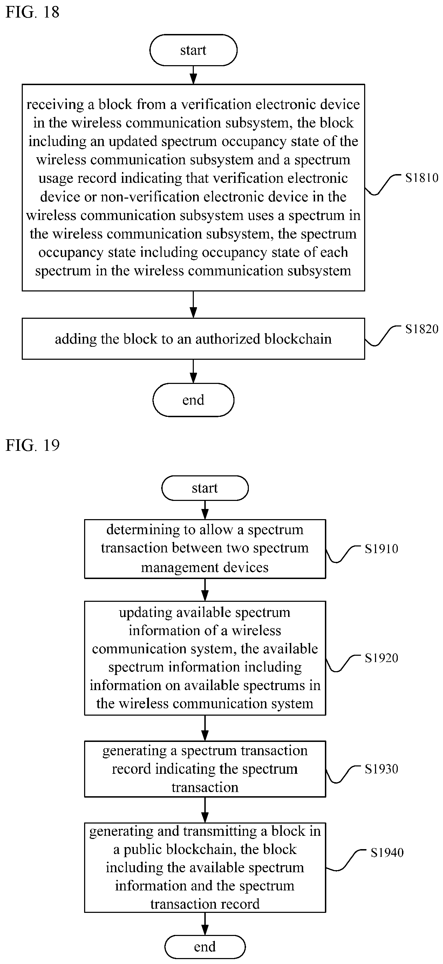

Figure 18 is a flowchart illustrating a wireless communication method performed by the electronic device 500 in a wireless communication system according to an embodiment of the present disclosure.

Reference is made to Figure 18. In S1810, a block is received from verification electronic device in the wireless communication subsystem, the block including an updated spectrum occupancy state of the wireless communication subsystem, and a spectrum usage record indicating that verification electronic device or non-verification electronic device in the wireless communication subsystem uses a spectrum in the wireless communication subsystem, the spectrum occupancy state including an occupancy state of each spectrum in the wireless communication subsystem.

In S 1820, the block is added to an authorized blockchain.

Here, the verification electronic device updates the spectrum occupancy state, generates the spectrum usage record, and generates the block. The electronic device serves as a non-verification electronic device, and all electronic devices in the wireless communication subsystem maintain the authorized blockchain.

Preferably, the wireless communication method further includes: determining an idle spectrum based on the spectrum occupancy state of the wireless communication subsystem; selecting, from the idle spectrum, a spectrum that the electronic device 500 expects to use; and transmitting a spectrum usage request to the verification electronic device, the spectrum usage request including the frequency spectrum that the electronic device 500 expects to use.

Preferably, the spectrum occupancy state further includes an occupancy node and occupancy time range for each spectrum in the wireless communication subsystem.

Preferably, the spectrum usage request further includes a time range in which the electronic device 500 expects to use a spectrum.

According to an embodiment of the present disclosure, a subject that performs the method may be the electronic device 500 according to the embodiment of the present disclosure. Therefore, the previous embodiments of the electronic device 500 are applicable here.

Next, a wireless communication method performed by the spectrum management device 600 in a wireless communication system according to an embodiment of the present disclosure is described in detail.

Figure 19 is a flowchart illustrating a wireless communication method performed by the spectrum management device 600 in a wireless communication system according to an embodiment of the present disclosure.

Reference is made to Figure 19. In S1910, it is determined to allow a spectrum transaction between two spectrum management devices.

In S 1920, available spectrum information of a wireless communication system is updated, the available spectrum information including information on available spectrums in the wireless communication system.

In S1930, a spectrum transaction record indicating the spectrum transaction is generated.

In S 1940, a block in a public blockchain is generated and transmitted, the block including the available spectrum information and the spectrum transaction record.

Here, the wireless communication system includes multiple wireless communication subsystems, the two spectrum management devices are located in different wireless communication subsystems, and all spectrum management devices in the wireless communication system maintain the public blockchain.

Preferably, the wireless communication method further includes: receiving information on available spectrums from another spectrum management device, the information on available spectrums including an available spectrum, a time range for an available spectrum, a wireless communication subsystem where an available spectrum is present, and a price of an available spectrum; updating available spectrum information of the wireless communication system; and generating and transmitting a block in the public blockchain, the block including available spectrum information.

Preferably, the wireless communication method further includes: determining whether to allow the transaction based on a verification result of each spectrum management device other than a buyer of the spectrum transaction in the wireless communication system.

Preferably, determining whether to allow the transaction includes: receiving a spectrum transaction request from the buyer of the spectrum transaction, the spectrum transaction request including a spectrum that the buyer of the spectrum transaction expects to trade; broadcasting the spectrum transaction request; and receiving a verification result from each spectrum management device other than the buyer of the spectrum transaction in the wireless communication system.

Preferably, determining whether to allow the transaction further includes: determining a verification result of the spectrum management device based on whether the spectrum expected to be traded is included in the available spectrum information, and/or based on an interference caused by the buyer of the spectrum transaction using the spectrum to the wireless communication subsystem where the spectrum management device is located.

Preferably, the wireless communication method further includes: determining a verification node for the wireless communication subsystem where the spectrum management device is located; and transmitting information of the verification node to all nodes in the wireless communication subsystem. The verification node is configured to: generate and transmit a block, the block including a spectrum occupancy state of the wireless communication subsystem and a spectrum usage record, and the spectrum occupancy state including an occupancy state of each spectrum in the wireless communication subsystem; and add the block to an authorized blockchain maintained by all nodes in the wireless communication subsystem.

Preferably, determining a verification node further includes: determining centrality of each node based on social relationship of respective nodes in the wireless communication subsystem, and determining a node having the largest centrality as the verification node, or determining a node having the largest resource among all nodes in the wireless communication subsystem as the verification node, the resource including one or more of throughput, computing resource and storage resource of the node.

According to an embodiment of the present disclosure, a subject that performs the method may be the spectrum management device 600 according to the embodiment of the present disclosure. Therefore, the previous embodiments of the spectrum management device 600 are applicable here.

Next, a wireless communication method performed by the spectrum management device 900 in a wireless communication system according to an embodiment of the present disclosure is described in detail.

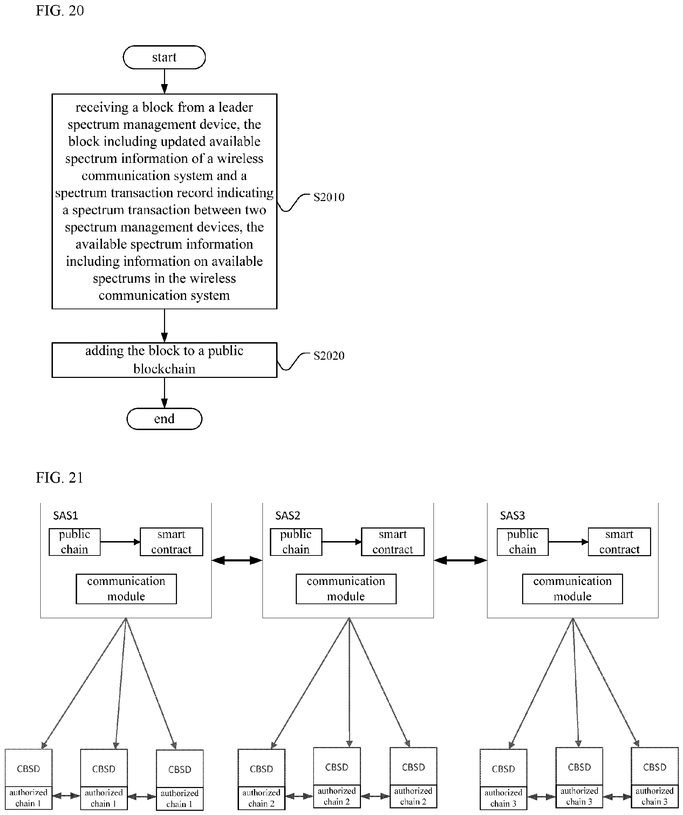

Figure 20 is a flowchart illustrating a wireless communication method performed by the spectrum management device 900 in a wireless communication system according to an embodiment of the present disclosure.

Reference is made to Figure 20. In S2010, a block is received from leader spectrum management device, the block including updated available spectrum information of a wireless communication system and a spectrum transaction record indicating a spectrum transaction between two spectrum management devices, the available spectrum information including information on available spectrums in the wireless communication system.

In S2020, the block is added to a public blockchain.

Here, the wireless communication system includes multiple wireless communication subsystems, the two spectrum management devices are located in different wireless communication subsystems, and all spectrum management devices in the wireless communication system maintain the public blockchain. The leader spectrum management device is used for updating the available spectrum information, generating the spectrum transaction record, and generating the block.

Preferably, the wireless communication method further includes: determining an available spectrum of another wireless communication subsystem based on the available spectrum information of the wireless communication system; selecting, from the available spectrum, a spectrum expected to be traded; and transmitting a spectrum transaction request to leader spectrum management device, the spectrum transaction request including the spectrum expected to be traded.

Preferably, the available spectrum information includes an available spectrum, a time range for an available spectrum, a wireless communication subsystem where an available spectrum is present, and a price of an available spectrum.

Preferably, the wireless communication method further includes: updating, based on a traded spectrum, a spectrum occupancy state of a wireless communication subsystem where the spectrum management device is located, the spectrum occupancy state including an occupancy state of each spectrum in the wireless communication subsystem; and transmitting the updated spectrum occupancy state to verification electronic device in the wireless communication subsystem, so that the verification electronic device generates and transmits a block in an authorized blockchain that includes the updated spectrum occupancy state, and all nodes in the wireless communication subsystem maintain the authorized blockchain.

Preferably, the wireless communication method further includes: receiving, from another spectrum management device in the wireless communication system, a voting request indicating that the other spectrum management device expects to serve as a leader spectrum management device; determining whether to vote for the other spectrum management device based on a historical transaction record between the spectrum management device and the other spectrum management device, computing resource of the other spectrum management device, and/or time of the voting request; and transmitting a voting response to the other spectrum management device, when it is determined to vote for the other spectrum management device.

Preferably, the wireless communication method further includes: transmitting, to another spectrum management device in the wireless communication system, a voting request indicating that the spectrum management device expects to serve as leader spectrum management device, in a case that no information is received from the leader management device within a predetermined time period; receiving a voting response from the other spectrum management device; and determining the spectrum management device to be leader spectrum management device, in a case where the number of received voting responses is greater than a predetermined threshold.

Preferably, the wireless communication method further includes: determining a tenure of the spectrum management device as the leader spectrum management device; and determining that the spectrum management device no longer serves as the leader spectrum management device, in a case that the tenure expires or in a case that the spectrum management device discovers another leader spectrum management device.

According to an embodiment of the present disclosure, a subject that performs the method may be the spectrum management device 900 according to the embodiment of the present disclosure. Therefore, the previous embodiments of the spectrum management device 900 are applicable here.

### <8. Application example>

The technology of the present disclosure is applicable to various products. For example, the spectrum management device 600 and the spectrum management device 900 may be implemented as any type of server, such as a tower server, a rack server, and a blade server. The spectrum management device 600 and the spectrum management device 900 may be a control module installed on a server (such as an integrated circuit module including a single wafer, and a card or blade inserted into a slot of a blade server).

The electronic device 200 and the electronic device 500 may be implemented as network side device. The network side device may be implemented as base station device in any type, such as a macro eNB and a small eNB, or may be implemented as a gNB (a base station in a 5G system) in any type. The small eNB may be an eNB covering a cell smaller than a macro cell, such as a pico eNB, a micro eNB, or a home (femto) eNB. Alternatively, the base station may be implemented as any other type of base station, such as a NodeB or a base transceiver station (BTS). The base station may include a body (which is also referred to as base station device) configured to control wireless communication and one or more remote radio heads (RRHs) that are arranged in a different place from the body.

An application example of the present disclosure is described below with reference to Figure 21. Figure 21 is a schematic diagram illustrating an application scenario of the present disclosure.

In Figure 21, a CBRS (Citizen Broadband Radio Service) system includes multiple SASs. CBSDs to which the SASs belong are trusted to each other. The SASs are managed by multiple operators, and therefore there is no trust relationship between the SASs. In this scenario, all CBSDs for each SAS may share a spectrum using an authorized blockchain. In addition, all SASs maintain a public blockchain to record spectrum transactions. In addition, under the control of the smart contract, a spectrum occupancy state within each SAS may be updated when a spectrum transaction is carried out between SASs.

For example, it is assumed that SAS 1 to SAS3 have the following spectrums. SAS1 has spectrums CH1, CH2, CH3, CH4, and CH5. SAS2 has spectrums CH6, CH7, CH8, CH9, and CH10. SAS3 has spectrums CH11, CH12, CH13, CH14, and CH15. Through an election process, SAS1 is determined to be leader spectrum management device. SAS2 finds that spectrum CH6 is idle within a time interval [t1, t2] and therefore is available, and then transmits information on the spectrum to SAS1, including, for example, an available time, a serial number of the available spectrum, a price of a unit spectrum, and a minimum available unit. SAS1 may update available spectrum information of the wireless communication system and generate a block.

Further, SAS3 finds a lack of spectrum resources and expects to purchase the spectrum CH6 in a time interval [t3, t2] (t3 is after 11), and then transmits a spectrum transaction request to SAS 1. SAS1 transmits the spectrum transaction request to SAS2 for verification, and verifies the spectrum transaction request and determine to allow the spectrum transaction. Then, SAS 1 updates the available spectrum information, generates a spectrum transaction record, and generates a block in a public blockchain. Further, after the transaction is completed, SAS2 and SAS3 may update the spectrum occupancy state in their respective wireless communication subsystems. In other words, spectrums of SAS1 to SAS3 are as follows. SAS1 has spectrums CH1, CH2, CH3, CH4, and CH5. SAS2 has spectrums CH7, CH8, CH9, and CH10. SAS3 has spectrums CH11, CH12, CH13, CH14, CH15, and CH6.

In addition, CBSDs managed by the SASs may perform spectrum sharing through an authorized blockchain. For example, CBSD of SAS1 may use frequency bands CH1 to CH5, CBSD of SAS2 may user frequency bands CH7 to CH10, and CBSD of SAS3 may use frequency bands CH11 to CH15, and CH6. A CBSD managed by SAS3 is described as an example. A verification node is selected first. CBSD that expects a spectrum resource learns an idle spectrum resource by querying the authorized blockchain and transmits a spectrum usage request to the verification node. The verification node determines whether to allow the spectrum usage request, and transmits, if allow, a spectrum usage response to the CBSD requesting the spectrum, and adds a spectrum usage record in a new block, so as to update the authorization blockchain.

### <Application examples of server>

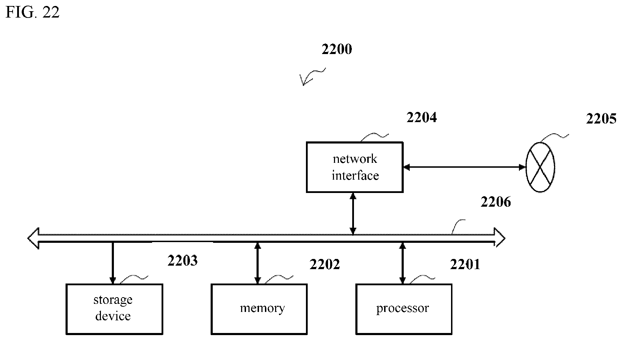

Figure 22 is a block diagram illustrating an example of a server 2200 that can implement the electronic device 600 and the electronic device 900 according to the present disclosure. The server 2200 includes a processor 2201, a memory 2202, a storage device 2203, a network interface 2204, and a bus 2206.

The processor 2201 may be, for example, a central processing unit (CPU) or a digital signal processor (DSP), and controls functions of the server 2200. The memory 2202 includes a random-access memory (RAM) and a read-only memory (ROM), and stores data and a program executed by the processor 2201. The storage device 2203 may include a storage medium, such as a semiconductor memory and a hard disk.

The network interface 2204 is a wired communication interface for connecting the server 2200 to a wired communication network 2205. The wired communication network 2205 may be a core network such as an Evolved Packet Core (EPC), or a packet data network (PDN) such as the Internet.

The bus 2206 connects the processor 2201, the memory 2202, the storage device 2203, and the network interface 2204 to each other. The bus 2206 may include two or more buses having different speeds (such as a high-speed bus and a low-speed bus).

In the server 2200 shown in Figure 22, the determination unit 610, the available spectrum information updating unit 620, the spectrum transaction record generation unit 630, the block generation unit 640, the verification unit 670 and the verification node determination unit 680 described with reference to Figure 6, and the spectrum selection unit 930, the spectrum transaction request generation unit 940, the spectrum occupancy state updating unit 950, the voting management unit 960, the voting request generation unit 970 and the leader node management unit 980 described with reference to Figure 9 may be implemented through the processor 2201. For example, the processor 2201 may execute instructions stored in the memory 2202 or the storage device 2203 to perform functions of: determining whether to allow the spectrum transaction, updating the available spectrum information, generating the spectrum transaction record, generating the block, verifying whether the spectrum transaction is allowed, determining the verification node, selecting the spectrum for transaction, generating the spectrum transaction request, updating the spectrum occupancy state, determining whether to vote, generating the voting request, determining whether to serve as a leader node, and determining the tenure of the leader node.

### <Application examples of based station>

### (First application example)

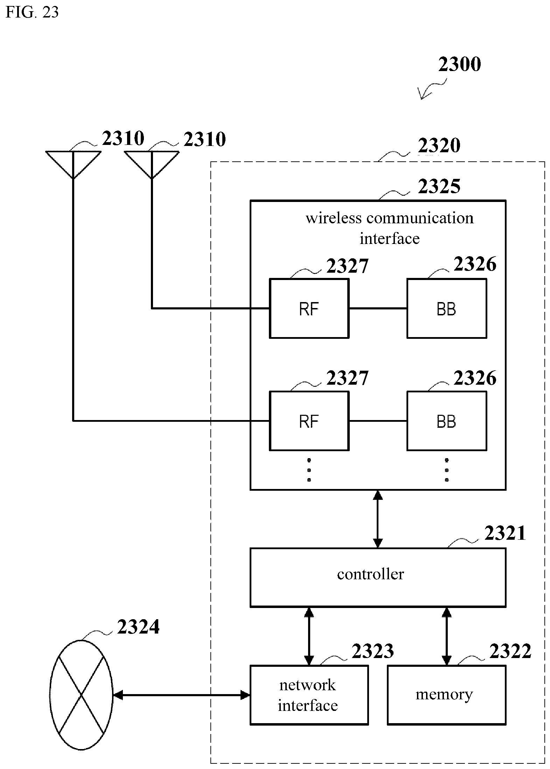

Figure 23 is a block diagram showing a first example of a schematic configuration of an eNB to which the technology of the present disclosure may be applied. An eNB 2300 includes one or more antennas 2310 and base station device 2320. The base station device 2320 and each of the antennas 2310 may be connected to each other via a RF cable.

Each of the antennas 2310 includes a single or multiple antenna elements (such as multiple antenna elements included in a multiple-input multiple-output (MIMO) antenna), and are used for transmitting and receiving wireless signals by the base station device 2320. As shown in Figure 23, the eNB 2300 may include multiple antennas 2310. For example, the multiple antennas 2310 may be compatible with multiple frequency bands used by the eNB 2300. Although Figure 23 shows an example in which the eNB 2300 includes multiple antennas 2310, the eNB 2300 may include a single antenna 2310.

The base station device 2320 includes a controller 2321, a memory 2322, a network interface 2323, and a wireless communication interface 2325.

The controller 2321 may be, for example, a CPU or a DSP, and operates various high-level functions of the base station device 2320. For example, the controller 2321 generates a data packet according to data in a signal processed by the wireless communication interface 2325, and transfers the generated packet via the network interface 2323. The controller 2321 may bundle data from multiple baseband processors to generate a bundled packet, and transfer the generated bundled packet. The controller 2321 may have logical functions of performing control such as radio resource control, radio bearer control, mobility management, admission control, and scheduling. The control may be performed in conjunction with an adjacent eNB or a core network node. The memory 2322 includes a RAM and a ROM, and stores a program executed by the controller 2321, and various types of control data (such as a terminal list, transmission power data, and scheduling data).

The network interface 2323 is a communication interface for connecting the base station device 2320 to a core network 2324. The controller 2321 may communicate with a core network node or another eNB via the network interface 2323. In this case, the eNB 2300, and the core network node or the other eNB may be connected to each other through a logical interface (such as an S1 interface and an X2 interface). The network interface 2323 may be a wired communication interface or a wireless communication interface for a wireless backhaul line. In a case that the network interface 2323 is a wireless communication interface, the network interface 2323 may use a higher frequency band for wireless communication than a frequency band used by the wireless communication interface 2325.

The wireless communication interface 2325 supports any cellular communication scheme (such as Long-Term Evolution (LTE) and LTE-Advanced), and provides wireless connection to a terminal in a cell of the eNB 2300 via the antenna 2310. The wireless communication interface 2325 may typically include, for example, a baseband (BB) processor 2326 and an RF circuit 2327. The BB processor 2326 may perform, for example, coding/decoding, modulation/demodulation and multiplexing/de-multiplexing, and perform various types of signal processes of layers (for example, L1, media access control (MAC), radio link control (RLC) and packet data convergence protocol (PDCP)). Instead of the controller 2321, the BB processor 2326 may have part or all of the above-mentioned logical functions. The BB processor 2326 may be a memory storing a communication control program, or a module including a processor and a related circuit configured to execute the program. Updating the program may change the functions of the BB processor 2326. The module may be a card or a blade inserted into a slot of the base station device 2320. Alternatively, the module may be a chip mounted on the card or the blade. In addition, the RF circuit 2327 may include, for example, a frequency mixer, a filter or an amplifier, and transmits and receives wireless signals via the antenna 2310.

As shown in Figure 23, the wireless communication interface 2325 may include multiple BB processors 2326. For example, the multiple BB processors 2326 may be compatible with multiple frequency bands used by the eNB 2300. As shown in Figure 23, the wireless communication interface 2325 may include multiple RF circuits 2327. For example, the multiple RF circuits 2327 may be compatible with multiple antenna elements. Although Figure 23 shows an example in which the wireless communication interface 2325 includes multiple BB processors 2326 and multiple RF circuits 2327, the wireless communication interface 2325 may include a single BB processor 2326 or a single RF circuit 2327.

### (Second Application Example)

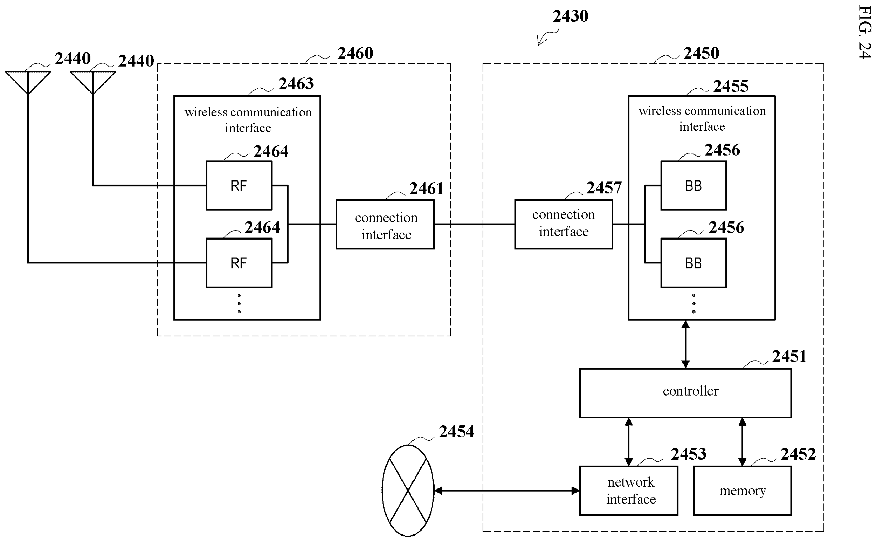

Figure 24 is a block diagram showing a second example of a schematic configuration of an eNB to which the technology of the present disclosure may be applied. An eNB 2430 includes a single or multiple antennas 2440, base station device 2450 and an RRH 2460. The RRH 2460 and the antennas 2440 may be connected to each other via an RF cable. The base station device 2450 and the RRH 2460 may be connected to each other via a high-speed line such as an optical fiber cable.

Each of the antennas 2440 includes a single or multiple antenna elements (such as multiple antenna elements included in a multiple-input multiple-output (MIMO) antenna), and is used for the RRH 2460 to transmit and receive wireless signals. As shown in Figure 24, the eNB 2430 may include multiple antennas 2440. For example, the multiple antennas 2440 may be compatible with multiple frequency bands used by the eNB 2430. Although Figure 24 shows an example in which the eNB 2430 includes multiple antennas 2440, the eNB 2430 may include a single antenna 2440.

The base station device 2450 includes a controller 2451, a memory 2452, a network interface 2453, a wireless communication interface 2455, and a connection interface 2457. The controller 2451, the memory 2452, and the network interface 2453 are the same as the controller 2321, the memory 2322, and the network interface 2323 described with reference to Figure 23. The network interface 2453 is configured to connect base station device 2450 to the core network 2454.

The wireless communication interface 2455 supports any cellular communication scheme (such as LTE and LTE-advanced), and provides wireless communication with a terminal located in a sector corresponding to the RRH 2460 via the RRH 2460 and the antenna 2440. The wireless communication interface 2455 may typically include, for example, a BB processor 2456. The BB processor 2456 is the same as the BB processor 2326 described with reference to Figure 23, except that the BB processor 2456 is connected to an RF circuit 2464 of the RRH 2460 via the connection interface 2457. As shown in Figure 24, the wireless communication interface 24955 may include multiple BB processors 2456. For example, the multiple BB processors 2456 may be compatible with multiple frequency bands used by the eNB 2430. Although Figure 24 shows an example in which the wireless communication interface 2455 includes multiple BB processors 2456, the wireless communication interface 2455 may include a single BB processor 2456.

The connection interface 2457 is an interface for connecting the base station device 2450 (the wireless communication interface 2455) to the RRH 2460. The connection interface 2457 may be a communication module for communication in the above-described high-speed line that connects the base station device 2450 (the wireless communication interface 2455) to the RRH 2460.

The RRH 2460 includes a connection interface 2461 and a wireless communication interface 2463.

The connection interface 2461 is an interface for connecting the RRH 2460 (the wireless communication interface 2463) to the base station device 2450. The connection interface 2461 may also be a communication module for communication in the above high-speed line.

The wireless communication interface 2463 transmits and receives wireless signals via the antenna 2440. The wireless communication interface 2463 may typically include, for example, the RF circuit 2464. The RF circuit 2464 may include, for example, a frequency mixer, a filter and an amplifier, and transmits and receives wireless signals via the antenna 2440. As shown in Figure 24, the wireless communication interface 2463 may include multiple RF circuits 2464. For example, the multiple RF circuits 2464 may support multiple antenna elements. Although Figure 24 shows the example in which the wireless communication interface 2463 includes multiple RF circuits 2464, the wireless communication interface 2463 may include a single RF circuit 2464.

In the eNB 2300 and eNB 2430 shown in Figure 23 and Figure 24, the determination unit 210, the spectrum occupancy state updating unit 220, the spectrum usage record generation unit 230, the block generation unit 240 and the interference calculation unit 270 described with reference to Figure 3, and the spectrum selection unit 520 and the spectrum usage request generation unit 540 described with reference to Figure 5 may be implemented by the controller 2321 and/or the controller 2451. At least a portion of the functionality may be implemented by the controller 2321 and the controller 2451. For example, the controller 2321 and/or the controller 2451 may execute instructions stored in the memory to perform functions of: determining whether to allow the spectrum usage, updating the spectrum occupancy state, generating the spectrum usage record, generate the block, calculating the interference, selecting the spectrum to be used, and generating the spectrum usage request.

Preferred embodiments of the present disclosure are described above with reference to the drawings. However, the present disclosure is not limited to the above examples. Those skilled in the art may make various alternations and modifications within the scope of the appended claims. It should be understood that these alternations and modifications shall naturally fall within the technical scope of the present disclosure.

For example, units shown by a dotted line block in the functional block diagram shown in the drawings indicate that the functional units are optional in the corresponding device, and the optional functional units may be combined appropriately to achieve required functions.

For example, multiple functions implemented by one unit in the above embodiments may be implemented by separate apparatus. Alternatively, multiple functions implemented by multiple units in the above embodiments may be implemented by separate apparatus, respectively. In addition, one of the above functions may be implemented by multiple units. Such configurations are naturally included in the technical scope of the present disclosure.

In the specification, steps described in the flowchart include not only the processes performed chronologically as the described sequence, but also the processes performed in parallel or individually rather than chronologically. Furthermore, the steps performed chronologically may be performed in other order appropriately.

Although the embodiments of the present disclosure are described in detail above with reference to the accompanying drawings, it should be understood that the embodiments are only for illustrating the present disclosure and do not constitute a limitation of the present disclosure. For those skilled in the art, various modifications and changes can be made to the embodiments without departing from the spirit and scope of the present disclosure. Therefore, the scope of the present disclosure is limited by only the appended claims and equivalents thereof.

## Claims

1. An electronic device in a wireless communication subsystem, comprising processing circuitry configured to:
determine to allow the electronic device or another electronic device in the wireless communication subsystem to use a spectrum in the wireless communication subsystem;
update a spectrum occupancy state of the wireless communication subsystem, the spectrum occupancy state including an occupancy state of each spectrum in the wireless communication subsystem;
generate a spectrum usage record indicating that the electronic device or the other electronic device uses the spectrum; and
generate and transmit a block in an authorized blockchain, the block including the spectrum occupancy state and the spectrum usage record,
wherein all electronic devices in the wireless communication subsystem maintain the authorized blockchain.

2. The electronic device according to claim 1, wherein the processing circuitry is further configured to:
determine an interference caused by the electronic device or the other electronic device using the spectrum to each electronic device other than the electronic device or the other electronic device in the wireless communication subsystem; and
determine, based on the interference, whether to allow the electronic device or the other electronic device to use the spectrum.

3. The electronic device according to claim 2, wherein the processing circuitry is further configured to:
determine to allow the electronic device or the other electronic device to use the spectrum, in a case that the interference caused by the electronic device or the other electronic device to each electronic device is less than an interference threshold.

4. The electronic device according to claim 1, wherein the spectrum occupancy state further comprises an occupancy node and an occupancy time range for each spectrum in the wireless communication subsystem.

5. The electronic device according to claim 1, wherein the processing circuitry is further configured to:
receive a spectrum usage request from the other electronic device, the spectrum usage request including a spectrum that the other electronic device expects to use and a time range in which the other electronic device expects to use the spectrum.

6. The electronic device according to claim 1, wherein the processing circuitry is further configured to:
receive an updated spectrum occupancy state of the wireless communication subsystem from a spectrum management device in the wireless communication subsystem; and
generate and transmit a block in the authorized blockchain, the block including the updated spectrum occupancy state.

7. An electronic device in a wireless communication subsystem, comprising processing circuitry configured to:
receive a block from a verification electronic device in the wireless communication subsystem, the block including an updated spectrum occupancy state of the wireless communication subsystem and a spectrum usage record indicating that a verification electronic device or a non-verification electronic device in the wireless communication subsystem uses a spectrum in the wireless communication subsystem, the spectrum occupancy state including an occupancy state of each spectrum in the wireless communication subsystem; and
add the block to an authorized blockchain,
wherein the verification electronic device updates the spectrum occupancy state, generates the spectrum usage record, and generates the block, wherein the electronic device serves as a non-verification electronic device, and wherein all electronic devices in the wireless communication subsystem maintain the authorized blockchain.

8. The electronic device according to claim 7, wherein the processing circuitry is further configured to:
determine an idle spectrum based on the spectrum occupancy state of the wireless communication subsystem;
select, from the idle spectrum, a spectrum that the electronic device expects to use; and
transmit a spectrum usage request to the verification electronic device, the spectrum usage request including a spectrum that the electronic device expects to use.

9. The electronic device according to claim 7, wherein the spectrum occupancy state further comprises an occupancy node and an occupancy time range for each spectrum in the wireless communication subsystem.

10. The electronic device according to claim 8, wherein the spectrum usage request further comprises a time range in which the electronic device expects to use the spectrum.

11. A spectrum management device, comprising processing circuitry configured to:
determine to allow a spectrum transaction between two spectrum management devices;
update available spectrum information of a wireless communication system, the available spectrum information including information on available spectrums in the wireless communication system;
generate a spectrum transaction record indicating the spectrum transaction; and
generate and transmit a block in a public blockchain, the block including the available spectrum information and the spectrum transaction record,
wherein the wireless communication system comprises a plurality of wireless communication subsystems, and the two spectrum management devices are located in different wireless communication subsystems, and wherein all spectrum management devices in the wireless communication system maintain the public blockchain.

12. The spectrum management device according to claim 11, wherein the processing circuitry is further configured to:
receive information on available spectrums from another spectrum management device, the information on available spectrums including an available spectrum, a time range for an available spectrum, a wireless communication subsystem where an available spectrum is present, and a price of an available spectrum;
update the available spectrum information of the wireless communication system; and
generate and transmit a block in the public blockchain, the block including the available spectrum information.

13. The spectrum management device according to claim 11, wherein the processing circuitry is further configured to:
determine whether to allow the transaction based on a verification result of each spectrum management device other than a buyer of the spectrum transaction in the wireless communication system.

14. The spectrum management device according to claim 13, wherein the processing circuitry is further configured to:
receive a spectrum transaction request from the buyer of the spectrum transaction, the spectrum transaction request including a spectrum that the buyer of the spectrum transaction expects to trade;
broadcast the spectrum transaction request; and
receive the verification result from each spectrum management device other than the buyer of the spectrum transaction in the wireless communication system.

15. The spectrum management device according to claim 14, wherein the processing circuitry is further configured to:
determine the verification result of the spectrum management device based on whether the spectrum expected to be traded is included in the available spectrum information, and/or based on an interference caused by the buyer of the spectrum transaction using the spectrum to the wireless communication subsystem where the spectrum management device is located.

16. The spectrum management device according to claim 11, wherein the processing circuitry is further configured to:
determine a verification node for the wireless communication subsystem where the spectrum management device is located; and
transmit information on the verification node to all nodes in the wireless communication subsystem,
wherein the verification node is configured to:
generate and transmit a block, the block including a spectrum usage record and a spectrum occupancy state of the wireless communication subsystem, and the spectrum occupancy state including an occupancy state of each spectrum in the wireless communication subsystem; and
add the block to an authorized blockchain maintained by all nodes in the wireless communication subsystem.

17. The spectrum management device according to claim 16, wherein the processing circuitry is further configured to:
determine centrality of each node based on social relationship of respective nodes in the wireless communication subsystem, and determine a node having the largest centrality as the verification node; or
determine a node having the largest resource among all nodes in the wireless communication subsystem as the verification node, the resource including one or more of throughput, computing resource and storage resource of the node.

18. A spectrum management device, comprising processing circuitry configured to:
receive a block from a leader spectrum management device, the block including updated available spectrum information of a wireless communication system and a spectrum transaction record indicating a spectrum transaction between two spectrum management devices, the available spectrum information including information on available spectrums in the wireless communication system; and
add the block to a public blockchain,
wherein the wireless communication system comprises a plurality of wireless communication subsystems, and the two spectrum management devices are located in different wireless communication subsystems, wherein all spectrum management devices in the wireless communication system maintain the public blockchain, and wherein the leader spectrum management device is used for updating the available spectrum information, generating the spectrum transaction record, and generating the block.

19. The spectrum management device according to claim 18, wherein the processing circuitry is further configured to:
determine available spectrums for another wireless communication subsystem based on the available spectrum information of the wireless communication system;
select, from the available spectrums, a spectrum expected to be traded; and
transmit a spectrum transaction request to the leader spectrum management device, the spectrum transaction request including the spectrum expected to be traded.

20. The spectrum management device according to claim 18, wherein the available spectrum information comprises an available spectrum, a time range for an available spectrum, a wireless communication subsystem where an available spectrum is present, and a price of an available spectrum.

21. The spectrum management device according to claim 19, wherein the processing circuitry is further configured to:
update, based on a traded spectrum, a spectrum occupancy state of a wireless communication subsystem where the spectrum management device is located, the spectrum occupancy state including an occupancy state of each spectrum in the wireless communication subsystem; and
transmit the updated spectrum occupancy state to a verification electronic device in the wireless communication subsystem, so that the verification electronic device generates and transmits a block in an authorized blockchain that includes the updated spectrum occupancy state, wherein the authorized blockchain is maintained by all nodes in the wireless communication subsystem.

22. The spectrum management device according to claim 18, wherein the processing circuitry is further configured to:
receive, from another spectrum management device in the wireless communication system, a voting request indicating that the other spectrum management device expects to be the leader spectrum management device;
determine whether to vote for the other spectrum management device based on a historical transaction record between the spectrum management device and the other spectrum management device, computing resource of the other spectrum management device, and/or time of the voting request; and
transmit a voting response to the other spectrum management device when it is determined to vote for the other spectrum management device.

23. The spectrum management device according to claim 18, wherein the processing circuitry is further configured to:
transmit to another spectrum management device in the wireless communication system a voting request indicating that the spectrum management device expects to serve as a leader spectrum management device, in a case that no information is received from the leader management device within a predetermined time period;
receive a voting response from the other spectrum management device; and
determine the spectrum management device as the leader spectrum management device, in a case where the number of received voting responses is greater than a predetermined threshold.

24. The spectrum management device according to claim 23, wherein the processing circuitry is further configured to:
determine a tenure of the spectrum management device as the leader spectrum management device; and
determine that the spectrum management device no longer serves as the leader spectrum management device, in a case that the tenure expires or in a case that the spectrum management device discovers another leader spectrum management device.

25. A wireless communication system, comprising:
a first wireless communication subsystem comprising:
first spectrum management device configured to update available spectrum information including information on available spectrums in the wireless communication system, generate a spectrum transaction record in the wireless communication system, and generate and transmit a block in a public blockchain including the available spectrum information and the spectrum transaction record;
first verification electronic device configured to update a spectrum occupancy state including an occupancy state of each spectrum in the first wireless communication subsystem, generate a spectrum usage record in the first wireless communication subsystem, and generate and transmit a block in a first authorized blockchain including the spectrum occupancy state and the spectrum usage record; and
first another electronic device configured to receive a block including the spectrum occupancy state and the spectrum usage record from the first verification electronic device, and add the block to the first authorized blockchain,
wherein the first spectrum management device, the first verification electronic device and the first another electronic device maintain the first authorized blockchain; and
a second wireless communication subsystem comprising:
second spectrum management device configured to receive a block including the available spectrum information and the spectrum transaction record from the first spectrum management device, and add the block to the public blockchain;
second verification electronic device configured to update a spectrum occupancy state including an occupancy state of each spectrum in the second wireless communication subsystem, generate a spectrum usage record in the second wireless communication subsystem, and generate and transmit a block in a second authorized blockchain including the spectrum occupancy state and the spectrum usage record; and
second another electronic device configured to receive a block including the spectrum occupancy state and the spectrum usage record from the second verification electronic device, and add the block to the second authorized blockchain,
wherein the second spectrum management device, the second verification electronic device and the second another electronic device maintain the second authorized blockchain,
wherein the first spectrum management device and the second spectrum management device maintain the public blockchain.

26. A wireless communication method performed by an electronic device in a wireless communication subsystem, comprising:
determining to allow the electronic device or another electronic device in the wireless communication subsystem to use a spectrum in the wireless communication subsystem;
updating a spectrum occupancy state of the wireless communication subsystem, the spectrum occupancy state including an occupancy state of each spectrum in the wireless communication subsystem;
generating a spectrum usage record indicating that the electronic device or the other electronic device uses the spectrum; and
generating and transmitting a block in an authorized blockchain, the block including the spectrum occupancy state and the spectrum usage record,
wherein all electronic devices in the wireless communication subsystem maintain the authorized blockchain.

27. The wireless communication method according to claim 26, further comprising:
determining an interference caused by the electronic device or the other electronic device using the spectrum to each electronic device other than the electronic device or the other electronic device in the wireless communication subsystem; and
determining, based on the interference, whether to allow the electronic device or the other electronic device to use the spectrum.

28. The wireless communication method according to claim 27, wherein determining whether to allow the electronic device or the other electronic device to use the spectrum comprises:
determining to allow the electronic device or the other electronic device to use the spectrum, in a case that the interference caused by the electronic device or the other electronic device to each electronic device is less than an interference threshold.

29. The wireless communication method according to claim 26, wherein the spectrum occupancy state further comprises an occupancy node and an occupancy time range for each spectrum in the wireless communication subsystem.

30. The wireless communication method according to claim 26, further comprising:
receiving a spectrum usage request from the other electronic device, the spectrum usage request including a spectrum that the other electronic device expects to use and a time range in which the other electronic device expects to use the spectrum.

31. The wireless communication method according to claim 26, further comprising:
receiving an updated spectrum occupancy state of the wireless communication subsystem from a spectrum management device in the wireless communication subsystem; and
generating and transmitting a block in the authorized blockchain, the block including the updated spectrum occupancy state.

32. A wireless communication method performed by an electronic device in a wireless communication subsystem, comprising:
receiving a block from a verification electronic device in the wireless communication subsystem, the block including an updated spectrum occupancy state of the wireless communication subsystem and a spectrum usage record indicating that a verification electronic device or a non-verification electronic device in the wireless communication subsystem uses a spectrum in the wireless communication subsystem, the spectrum occupancy state including an occupancy state of each spectrum in the wireless communication subsystem; and
adding the block to an authorized blockchain,
wherein the verification electronic device updates the spectrum occupancy state, generates the spectrum usage record, and generates the block, and wherein the electronic device serves as a non-verification electronic device, and all electronic devices in the wireless communication subsystem maintain the authorized blockchain.

33. The wireless communication method according to claim 32, further comprising:
determining idle spectrums based on the spectrum occupancy state of the wireless communication subsystem;
selecting, from the idle spectrums, a spectrum that the electronic device expects to use; and
transmitting a spectrum usage request to the verification electronic device, the spectrum usage request including the spectrum that the electronic device expects to use.

34. The wireless communication method according to claim 32, wherein the spectrum occupancy state further comprises an occupancy node and an occupancy time range for each spectrum in the wireless communication subsystem.

35. The wireless communication method according to claim 33, wherein the spectrum usage request further comprises a time range in which the electronic device expects to use the spectrum.

36. A wireless communication method performed by a spectrum management device, comprising:
determining to allow a spectrum transaction between two spectrum management devices;
updating available spectrum information of a wireless communication system, the available spectrum information including information on available spectrums in the wireless communication system;
generating a spectrum transaction record indicating the spectrum transaction;
generating and transmitting a block in a public blockchain, the block including the available spectrum information and the spectrum transaction record,
wherein the wireless communication system comprises a plurality of wireless communication subsystems, and the two spectrum management devices are located in different wireless communication subsystems, and wherein all spectrum management devices in the wireless communication system maintain the public blockchain.

37. The wireless communication method according to claim 36, further comprising:
receiving information on available spectrums from another spectrum management device, the information on available spectrums including an available spectrum, a time range for an available spectrum, a wireless communication subsystem where an available spectrum is present, and a price of an available spectrum;
updating the available spectrum information of the wireless communication system; and
generating and transmitting a block in the public blockchain, the block including the available spectrum information.

38. The wireless communication method according to claim 36, further comprising:
determining whether to allow the transaction based on a verification result of each spectrum management device other than a buyer of the spectrum transaction in the wireless communication system.

39. The wireless communication method according to claim 38, wherein determining whether to allow the transaction comprises:
receiving a spectrum transaction request from the buyer of the spectrum transaction, the spectrum transaction request including a spectrum that the buyer of the spectrum transaction expects to trade;
broadcasting the spectrum transaction request; and
receiving a verification result from each spectrum management device other than the buyer of the spectrum transaction in the wireless communication system.

40. The wireless communication method according to claim 39, wherein determining whether to allow the transaction further comprises:
determining the verification result of the spectrum management device based on whether the spectrum expected to be traded is included in the available spectrum information, and/or based on an interference caused by the buyer of the spectrum transaction using the spectrum to the wireless communication subsystem where the spectrum management device is located.

41. The wireless communication method according to claim 36, further comprising:
determining a verification node for the wireless communication subsystem where the spectrum management device is located; and
transmitting information on the verification node to all nodes in the wireless communication subsystem,
wherein the verification node is configured to generate and transmit a block, the block including a spectrum usage record and a spectrum occupancy state of the wireless communication subsystem, and the spectrum occupancy state including an occupancy state of each spectrum in the wireless communication subsystem; and configured to add the block to an authorized blockchain maintained by all nodes in the wireless communication subsystem.

42. The wireless communication method according to claim 41, wherein determining the verification node further comprises:
determining centrality of each node based on social relationship of respective nodes in the wireless communication subsystem, and determining a node having the largest centrality as the verification node; or
determining a node having the largest resource among all nodes in the wireless communication subsystem as the verification node, the resource including one or more of throughput, computing resource and storage resource of the node.

43. A wireless communication method performed by a spectrum management device, comprising:
receiving a block from a leader spectrum management device, the block including updated available spectrum information of a wireless communication system and a spectrum transaction record indicating a spectrum transaction between two spectrum management devices, the available spectrum information including information on available spectrums in the wireless communication system; and
adding the block to a public blockchain,
wherein the wireless communication system comprises a plurality of wireless communication subsystems, and the two spectrum management devices are located in different wireless communication subsystems, wherein all spectrum management devices in the wireless communication system maintain the public blockchain, and wherein the leader spectrum management device is used for updating the available spectrum information, generating the spectrum transaction record, and generating the block.

44. The wireless communication method according to claim 43, further comprising:
determining available spectrums for another wireless communication subsystem based on the available spectrum information of the wireless communication system;
selecting, from the available spectrums, a spectrum expected to be traded; and
transmitting a spectrum transaction request to the leader spectrum management device, the spectrum transaction request including the spectrum expected to be traded.

45. The wireless communication method according to claim 43, wherein the available spectrum information comprises an available spectrum, a time range for an available spectrum, a wireless communication subsystem where an available spectrum is present, and a price of an available spectrum.

46. The wireless communication method according to claim 44, further comprising:
updating, based on a traded spectrum, a spectrum occupancy state of a wireless communication subsystem where the spectrum management device is located, the spectrum occupancy state including an occupancy state of each spectrum in the wireless communication subsystem; and
transmitting the updated spectrum occupancy state to a verification electronic device in the wireless communication subsystem, so that the verification electronic device generates and transmits a block in an authorized blockchain that includes the updated spectrum occupancy state, the authorized blockchain being maintained by all nodes in the wireless communication subsystem.

47. The wireless communication method according to claim 43, further comprising:
receiving, from another spectrum management device in the wireless communication system, a voting request indicating that the other spectrum management device expects to be a leader spectrum management device;
determining whether to vote for the other spectrum management device based on a historical transaction record between the spectrum management device and the other spectrum management device, computing resource of the other spectrum management device, and/or time of the voting request; and
transmitting a voting response to the other spectrum management device when it is determined to vote for the other spectrum management device.

48. The wireless communication method according to claim 43, further comprising:
transmitting, to another spectrum management device in the wireless communication system, a voting request indicating that the spectrum management device expects to serve as a leader spectrum management device, in a case that no information is received from the leader management device within a predetermined time period;
receiving a voting response from the other spectrum management device; and
determining the spectrum management device to be a leader spectrum management device, in a case where the number of received voting responses is greater than a predetermined threshold.

49. The wireless communication method according to claim 48, further comprising:
determining a tenure of the spectrum management device as the leader spectrum management device; and
determining that the spectrum management device no longer serves as the leader spectrum management device, in a case that the tenure expires or in a case that the spectrum management device discovers another leader spectrum management device.

50. A computer-readable storage medium comprising executable computer instructions, wherein the executable computer instructions, when executed by a computer, cause the computer to perform the wireless communication method according to any one of claims 26 to 49.
